# EUROPEAN PATENT APPLICATION

(11) **EP 4 681 966 A1**
(43) Date of publication of application: **21.01.2026**
(21) Application number: 23927255.2
(22) Date of filing: 28.12.2023
(51) Int. Cl.: B60L 3/00, H02J 7/00

(54) **MANAGEMENT SYSTEM, STORAGE BATTERY, POWER SOURCE DEVICE, VEHICLE, AND OVERCHARGE PROTECTION METHOD**

(30) Priority: 13.03.2023 CN 202320613985 U; 13.03.2023 CN 202310273835; 17.04.2023 CN 202320942223 U; 26.05.2023 CN 202321312514 U; 26.05.2023 CN 202310611582; 16.11.2023 CN 202323101116 U
(71) Applicant: Shenzhen Carku Technology Co., Ltd., Shenzhen, Guangdong 518109 (CN)
(72) Inventor: LEI, Yun, Shenzhen, Guangdong 518109 (CN); ZHANG, Zhifeng, Shenzhen, Guangdong 518109 (CN); LIN, Jianping, Shenzhen, Guangdong 518109 (CN)
(74) Representative: M. Zardi & Co S.A.
(86) International application number: PCT/CN2023/142824
(87) International publication number: WO 2024/187915

(57) **Abstract**

The present disclosure provides a management system (110), a vehicle battery (1100), a power supply device, a vehicle (11000), and an over-charge protection method. The management system (110) includes a first energy storage component (1112), a battery interface (1114), a load interface (1116), and an energy storage component management circuit (1118). The first energy storage component (1112) is capable of supplying power to an electrical device (1300) of a vehicle (11000) through the battery interface (1114) and supplying power to a load through the load interface (1116). The energy storage component management circuit (1118) is configured to: disconnect the first energy storage component (1112) from the load interface (1116) when an electric charge of the first energy storage component (1112) is less than a first predetermined electric charge, and disconnect the first energy storage component (1112) from the battery interface (1114) when the electric charge of the first energy storage component (1112) is less than a second predetermined electric charge. The first predetermined electric charge is greater than the second predetermined electric charge.

## Description

### PRIORITY INFORMATION

This application claims priority to and benefits of Chinese patent applications No. 202310273835.3 and No. 202320613985.X, filed with China National Intellectual Property Administration on March 13, 2023, claims priority to and benefits of Chinese patent application No. 202320942223.4, filed with China National Intellectual Property Administration on April 17, 2023, claims priority to and benefits of Chinese patent applications No. 202310611582.6 and No. 202321312514.1, filed with China National Intellectual Property Administration on May 26, 2023, and claims priority and benefits of Chinese patent application No. 202323101116.8, filed with China National Intellectual Property Administration on November 16, 2023, the entire contents of which are incorporated herein by reference.

### FIELD

The present disclosure relates to the field of battery management technologies, and more particularly, to a management system, a battery, a power supply device, a vehicle, and an over-charge protection method.

### BACKGROUND

In the related art, a parking air conditioner is prone to discharge a first energy storage component of a vehicle to an over-discharge protection state during use, resulting in the vehicle being unable to start normally.

### SUMMARY

A management system, a battery, a power supply device, a vehicle, and an over-charge protection method are provided in an embodiment of the present disclosure.

A management system provided in an embodiment of the present disclosure may be applied to a vehicle battery. The management system includes a first energy storage component, a battery interface, a load interface, and an energy storage component management circuit. The first energy storage component is capable of supplying power to an electrical device of a vehicle through the battery interface. The first energy storage component is capable of supplying power to a load through the load interface. The energy storage component management circuit is configured to: disconnect the first energy storage component from the load interface when an electric charge of the first energy storage component is less than a first predetermined electric charge, and disconnect the first energy storage component from the battery interface when the electric charge of the first energy storage component is less than a second predetermined electric charge, the first predetermined electric charge being greater than the second predetermined electric charge.

A vehicle battery provided in an embodiment of the present disclosure includes the above-described management system and a housing. The management system is disposed in the housing.

A vehicle provided in an embodiment of the present disclosure includes the above-described vehicle battery and an electrical device. The vehicle battery is capable of supplying power to the electrical device.

In the management system, the vehicle battery, and the vehicle provided in an embodiment of the present disclosure, the first energy storage component may be discharged through the battery interface and the load interface respectively, and the battery interface and the load interface may be used as over-discharge protection points separately. When the electric charge of the first energy storage component is less than the first predetermined electric charge, the energy storage component management circuit disconnects the first energy storage component from the load interface to avoid an over-discharge problem of the first energy storage component. When the electric charge of the first energy storage component is less than the second predetermined electric charge, the energy storage component management circuit disconnects the first energy storage component from the battery interface to avoid the over-discharge problem of the first energy storage component. The first predetermined electric charge is greater than the second predetermined electric charge. In this way, the load is prevented from discharging the first energy storage component to an excessively low electric charge, which would otherwise cause the electrical device of the vehicle (such as a starter) to fail to start normally, ensuring the vehicle to be used normally.

A management system provided in an embodiment of the present disclosure may be applied to a power supply device. The management system includes an energy storage component, a battery interface, a MOS transistor, a relay, and a control circuit. The energy storage component is configured to supply power to an electrical device of a vehicle through the battery interface. The MOS transistor is connected to the energy storage component and the battery interface. The relay is connected in parallel with the MOS transistor. The control circuit is configured to turn on the relay and the MOS transistor, to enable the energy storage component to supply power to the electrical device through the battery interface.

A power supply device provided in an embodiment of the present disclosure includes the above-described management system and a housing. The management system is disposed in the housing.

A vehicle provided in an embodiment of the present disclosure includes the above-described power supply device and an electrical device. The power supply device is capable of supplying power to the electrical device.

A power supply device provided in an embodiment of the present disclosure includes a battery interface, a MOS transistor, and a high-power absorption device. The battery interface is configured to be connected to an energy storage component. The energy storage component is configured to supply power to an electrical device of a vehicle through the battery interface. The MOS transistor is configured to be connected to the energy storage component and the battery interface. The high-power absorption device is connected in parallel with the MOS transistor, and configured to enable a voltage of the MOS transistor to be less than a predetermined voltage.

A management system provided in an embodiment of the present disclosure includes an over-charge protection switch and a control circuit. The over-charge protection switch is configured to be connected to an energy storage component. The control circuit is configured to output a control signal in response to the energy storage component reaching an over-charge protection condition. The control signal is configured to control the over-charge protection switch, to enable a charging current of the energy storage component to decrease to a predetermined charging current. The control circuit is further configured to turn off the over-charge protection switch subsequent to the charging current of the energy storage component decreasing to the predetermined charging current.

A power supply device provided in an embodiment of the present disclosure includes the management system according to any one of the above-described embodiments and a housing. The management system is disposed in the housing.

A vehicle provided in an embodiment of the present disclosure includes the power supply device according to any one of the above-described embodiments and a vehicle generator. The vehicle generator is capable of charging the energy storage component.

A over-charge protection method provided in an embodiment of the present includes: outputting a control signal in response to an energy storage component reaching an over-charge protection condition, the control signal being configured to control an over-charge protection switch, to enable a charging current of the energy storage component to decrease to a predetermined charging current; and turning off the over-charge protection switch subsequent to the charging current of the energy storage component decreasing to the predetermined charging current.

Additional aspects and advantages of the present disclosure will be provided in part in the following description, or will in part become apparent from the following description or be learned from practicing of the present disclosure.

### BRIEF DESCRIPTION OF THE DRAWINGS

The above and/or additional aspects and advantages of the present disclosure will become more apparent and more understandable from the following description of embodiments taken in conjunction with the accompanying drawings.
FIG. 1 is a schematic diagram of a management system according to some embodiments of the present disclosure.
FIG. 2 is a schematic diagram of a vehicle according to some embodiments of the present disclosure.
FIG. 3 is a schematic diagram of a management system according to some embodiments of the present disclosure.
FIG. 4 is a schematic diagram of a vehicle according to some embodiments of the present disclosure.
FIG. 5 is a schematic diagram of a power supply device according to some embodiments of the present disclosure.
FIG. 6 is a partial circuit diagram of a power supply device according to some embodiments of the present disclosure.
FIG. 7 is a schematic diagram of a management system according to some embodiments of the present disclosure.
FIG. 8 is a circuit diagram of a second drive circuit according to some embodiments of the present disclosure.
FIG. 9 is a circuit diagram of a current detection circuit according to some embodiments of the present disclosure.
FIG. 10 is a circuit diagram of a current detection circuit according to some embodiments of the present disclosure.
FIG. 11 is a schematic diagram of a vehicle according to some embodiments of the present disclosure.

### DETAILED DESCRIPTION OF THE EMBODIMENTS

Embodiments of the present disclosure will be described in detail below with reference to examples thereof as illustrated in the accompanying drawings, throughout which same or similar elements, or elements having same or similar functions, are denoted by same or similar reference numerals. The embodiments described below with reference to the drawings are illustrative only, and are intended to explain, rather than limiting, the present disclosure.

In the related art, a first energy storage component on a vehicle may supply power to a 24V parking air conditioner. An electrical device on the vehicle and the parking air conditioner share an output interface, and the parking air conditioner is prone to discharge the first energy storage component of the vehicle to an over-discharge protection state during use, resulting in the vehicle being unable to start normally.

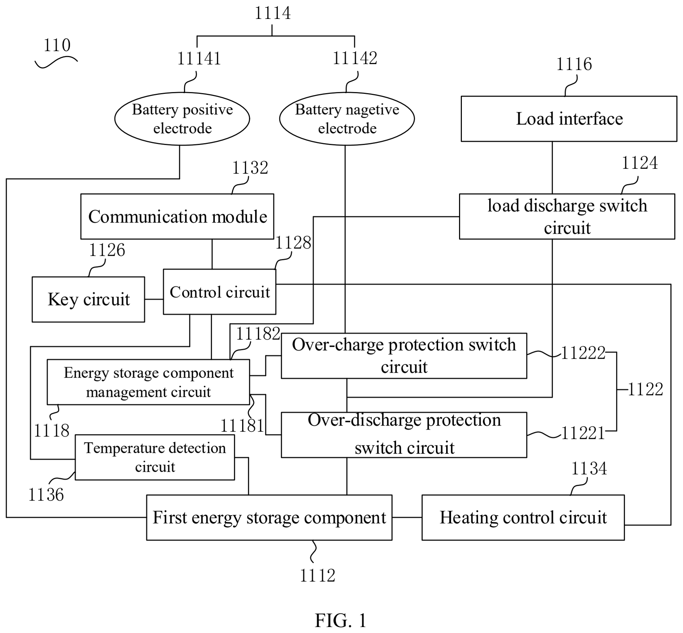

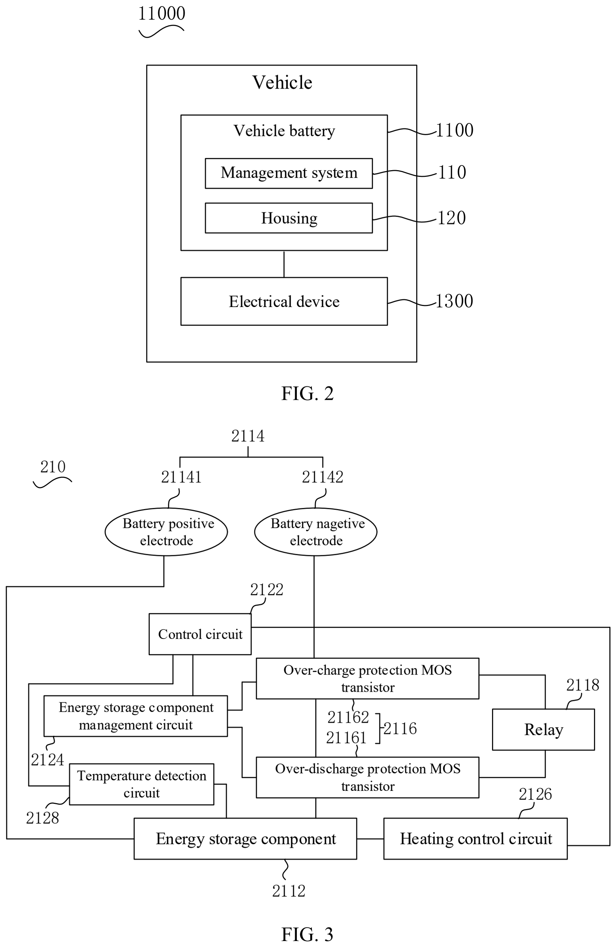

As illustrated in FIG. 1 and FIG. 2, a management system 110 provided in an embodiment of the present disclosure may be applied to a vehicle battery 1100. The management system 110 includes a first energy component 1112, a battery interface 1114, a load interface 1116, and an energy storage component management circuit 1118. The first energy storage component 1112 is capable of supplying power to an electrical device 1300 of a vehicle 11000 through the battery interface 1114. The first energy storage component 1112 is capable of supplying power to a load through the load interface 1116. The energy storage component management circuit 1118 is configured to: disconnect the first energy storage component 1112 from the load interface 1116 when an electric charge of the first energy storage component 1112 is less than a first predetermined electric charge, and disconnect the first energy storage component 1112 from the battery interface 1114 when the electric charge of the first energy storage component 1112 is less than a second predetermined electric charge. The first predetermined electric charge is greater than the second predetermined electric charge.

In the management system 110 provided in an embodiment of the present disclosure, the first energy storage component 1112 may be discharged through the battery interface 1114 and the load interface 1116 respectively, and the battery interface 1114 and the load interface 1116 may be used as over-discharge protection points separately. When the electric charge of the first energy storage component 1112 is less than the first predetermined electric charge, the energy storage component management circuit 1118 disconnects the first energy storage component 1112 from the load interface 1116 to avoid an over-discharge problem of the first energy storage component. When the electric charge of the first energy storage component 1112 is less than the second predetermined electric charge, the energy storage component management circuit 1118 disconnects the first energy storage component 1112 from the battery interface 1114 to avoid the over-discharge problem of the first energy storage component. The first predetermined electric charge is greater than the second predetermined electric charge. In this way, the load is prevented from discharging the first energy storage component 1112 to an excessively low electric charge, which would otherwise cause the electrical device 1300 of the vehicle 11000 (such as a starter) to fail to start normally, ensuring the vehicle 11000 to be used normally.

The electrical device 1300 of the vehicle 11000 includes a starter, a vehicle computer, vehicle lights, an audio system, etc. The first energy storage component 1112 is capable of supplying power to the starter, the vehicle computer, the vehicle lights, the audio system, etc. For example, the first energy storage component 1112 is capable of supplying power to the starter through the battery interface 1114 to assist the starter in ignition.

The load includes a parking air conditioner or a direct current household appliance. The first energy storage component 1112 is capable of supplying power to the parking air conditioner or a direct current household appliance through the load interface 1116. In some embodiments, the first energy storage component 1112 is a 24V iron-lithium first energy storage component, and the load may include other 24V loads, which is not specifically limited here.

The energy storage component management circuit 1118 may include at least one of a first energy storage component BMS management circuit or a control circuit 1128. A control function in an embodiment may be completed by the first energy storage component BMS management circuit or the control circuit 1128 separately, or may be completed by the first energy storage component BMS management circuit and the control circuit 1128 together. The control circuit 1128 may be a single-chip microcomputer circuit or a driver board, and the driver board may include a Central Processing Unit (CPU), a Microcontroller Unit (MCU), other general-purpose processors, a Digital Signal Processor (DSP), an Application Specific Integrated Circuit (ASIC), a Field-Programmable Gate Array (FPGA) or other programmable logic devices, discrete gates or transistor logic devices, discrete hardware components, etc.

In an embodiment of the present disclosure, the energy storage component management circuit 1118 is the first energy storage component BMS management circuit. The control circuit 1128 is the single-chip microcomputer circuit. The energy storage component management circuit 1118 is controlled by the control circuit 1128. The energy storage component management circuit 1118 and the control circuit 1128 jointly realize the control function in the embodiment.

The battery interface 1114 and the load interface 1116 are separately disposed, in such a manner that the energy storage component management circuit 1118 may use the battery interface 1114 and the load interface 1116 as the over-discharge protection points respectively, that is, the load interface 1116 is used as an over-discharge point 1, and the battery interface 1114 is used as an over-discharge point 2. When the electric charge of the first energy storage component 1112 is less than the first predetermined electric charge, the energy storage component management circuit 1118 disconnects the first energy storage component 1112 from the load interface 1116 to avoid the over-discharge problem of the first energy storage component. When the electric charge of the first energy storage component 1112 is less than the second predetermined electric charge, the energy storage component management circuit 1118 disconnects the first energy storage component 1112 from the battery interface 1114 to avoid the over-discharge problem of the first energy storage component. The first predetermined electric charge is, for example, 15%, and the second predetermined electric charge is, for example, 5%. In this way, the load may only use the electric charge of the first energy storage component 1112 down to the first predetermined electric charge. In this case, the electrical device 1300 of the vehicle 11000 may still start normally, for example, the starter may still ignite and start normally, ensuring normal use of the vehicle 11000. By reasonably allocating and setting different over-discharge points, the electric charge of the first energy storage component may be fully managed to work within a reasonable range, improving an experience effect of a product.

As illustrated in FIG. 1, in some embodiments, the management system 110 further includes an over-discharge protection switch circuit 11221 connected to the first energy storage component 1112 and the battery interface 1114. The energy storage component management circuit 1118 is configured to disconnect the over-discharge protection switch circuit 11221 when the electric charge of the first energy storage component 1112 is less than the second predetermined electric charge, to disconnect the first energy storage component 1112 from the battery interface 1114. In this way, the energy storage component management circuit 1118 may control connection/disconnection between the first energy storage component 1112 and the battery interface 1114 by controlling the over-discharge protection switch circuit 11221.

In some embodiments, the battery interface 1114 includes a battery positive electrode 11141 and a battery negative electrode 11142. The first energy storage component 1112 is connected to the battery positive electrode 11141, and the over-discharge protection switch circuit 11221 is connected to the first energy storage component 1112 and the battery negative electrode 11142.

The over-discharge protection switch circuit 11221 may include switch devices such as a relay and a MOS transistor, which is not specifically limited here.

In some embodiments, the management system 110 further includes a load discharge switch circuit 1124 connected to the first energy storage component 1112 and the load interface 1116. The energy storage component management circuit 1118 is configured to disconnect the load discharge switch circuit 1124 when the electric charge of the first energy storage component 1112 is less than the first predetermined electric charge, to disconnect the first energy storage component 1112 from the load interface 1116.

In this way, the energy storage component management circuit 1118 may control connection/disconnection between the first energy storage component 1112 and the load interface 1116 by controlling the load discharge switch circuit 1124.

The load discharge switch circuit 1124 may include switch devices such as a relay and a MOS transistor, which is not specifically limited here.

In some embodiments, the first energy storage component 1112 may be connected to the load interface 1116 through the over-discharge protection switch circuit 11221 and the load discharge switch circuit 1124. Thus, in a case where the load discharge switch circuit 1124 is out of control, the over-discharge protection switch circuit 11221 may be disconnected to disconnect the first energy storage component 1112 from the load interface 1116. In some embodiments, the first energy storage component 1112 may be connected to the load interface 1116 directly through the load discharge switch circuit 1124, which is not specifically limited here.

As illustrated in FIG. 1, in some embodiments, the management system 110 further includes a key circuit 1126 and the control circuit 1128. The key circuit 1126 is configured to input a key signal. The control circuit 1128 is connected to the key circuit 1126 and the energy storage component management circuit 1118, and is configured to generate a control signal for controlling the energy storage component management circuit 1118 based on the key signal. The energy storage component management circuit 1118 is configured to: when the control signal is received and the electric charge of the first energy storage component 1112 is greater than a third predetermined electric charge, connect the first energy storage component 1112 and the battery interface 1114; and when the control signal is received and the electric charge of the first energy storage component 1112 is less than the third predetermined electric charge, disconnect the first energy storage component 1112 from the battery interface 1114. The second predetermined electric charge is greater than the third predetermined electric charge.

The energy storage component management circuit 1118 may use the key circuit 1126 as the over-discharge protection point, that is, the key circuit 1126 is used as an over-discharge point 3. When the key circuit 1126 inputs the key signal and the electric charge of the first energy storage component 1112 is greater than the third predetermined electric charge, the first energy storage component 1112 is connected to the battery interface 1114, in such a manner that the first energy storage component 1112 supplies power to the electrical device 1300 through the battery interface 1114. When the key circuit 1126 inputs the key signal and the electric charge of the first energy storage component 1112 is less than the third predetermined electric charge, the energy storage component management circuit 1118 disconnects the first energy storage component 1112 from the battery interface 1114, to avoid the over-discharge problem of the first energy storage component. The third predetermined electric charge is, for example, 0%. In this way, when the electric charge of the first energy storage component 1112 is less than the second predetermined electric charge and greater than the third predetermined electric charge, the first energy storage component 1112 may still be controlled by the key circuit 1126 to supply power to the electrical device 1300. However, in order to avoid the over-discharge problem of the first energy storage component, when the control signal is received and the electric charge of the first energy storage component 1112 is less than the third predetermined electric charge, the first energy storage component 1112 is disconnected from the battery interface 1114. In combination with the over-discharge point 1 and the over-discharge point 2, a three-level discharge protection mode may be achieved.

As illustrated in FIG. 1, in some embodiments, the management system 110 further includes the control circuit 1128 and a communication module 1132. The communication module 1132 is configured to communicate with a predetermined terminal. The control circuit 1128 is connected to the communication module 1132 and the energy storage component management circuit 1118, and is configured to generate a control signal for controlling the energy storage component management circuit 1118 based on a target communication signal of the predetermined terminal. The energy storage component management circuit 1118 is configured to: when the control signal is received and the electric charge of the first energy storage component 1112 is greater than the third predetermined electric charge, connect the first energy storage component 1112 and the battery interface 1114; and when the control signal is received and the electric charge of the first energy storage component 1112 is less than the third predetermined electric charge, disconnect the first energy storage component 1112 from the battery interface 1114. The second predetermined electric charge is greater than the third predetermined electric charge.

In an exemplary embodiment of the present disclosure, the communication module 1132 may include a 2G or 4G or Bluetooth communication circuit, and the predetermined terminal is, for example, a mobile phone of a target user. The energy storage component management circuit 1118 may use the communication module 1132 as the over-discharge protection point, that is, the communication module 1132 is used as the over-discharge point 3. When the communication module 1132 inputs the target communication signal and the electric charge of the first energy storage component 1112 is greater than the third predetermined electric charge, the first energy storage component 1112 is connected to the battery interface 1114, in such a manner that the first energy storage component 1112 supplies power to the electrical device 1300 through the battery interface 1114. When the communication module 1132 inputs the target communication signal and the electric charge of the first energy storage component 1112 is less than the third predetermined electric charge, the energy storage component management circuit 1118 disconnects the first energy storage component 1112 from the battery interface 1114, to avoid the over-discharge problem of the first energy storage component. The third predetermined electric charge is, for example, 0%. In this way, when the electric charge of the first energy storage component 1112 is less than the second predetermined electric charge and greater than the third predetermined electric charge, the first energy storage component 1112 may still be controlled by the communication module 1132 to supply power to the electrical device 1300. However, in order to avoid the over-discharge problem of the first energy storage component, when the control signal is received and the electric charge of the first energy storage component 1112 is less than the third predetermined electric charge, the first energy storage component 1112 is disconnected from the battery interface 1114. In combination with the over-discharge point 1 and the over-discharge point 2, the three-level discharge protection mode may be achieved.

In some embodiments, the management system 110 may transmit information of the first energy storage component (such as electric charge, temperature, etc.) to the predetermined terminal through the communication module 1132, and a user may transmit a communication signal to the management system 110 by operating the predetermined terminal, to control the management system 110.

As illustrated in FIG. 1, in some embodiments, the management system 110 further includes the control circuit 1128 and a heating control circuit 1134. The control circuit 1128 is connected to the heating control circuit 1134. The heating control circuit 1134 is configured to heat the first energy storage component 1112. The control circuit 1128 is configured to control the heating control circuit 1134 to heat the first energy storage component 1112 when a temperature of the first energy storage component 1112 is lower than a predetermined temperature.

In this way, under a low temperature condition, the first energy storage component 1112 may be heated by controlling the heating control circuit 1134, to enable the first energy storage component 1112 to obtain a good charging or discharging operating temperature range.

In an exemplary embodiment of the present disclosure, the heating control circuit 1134 includes a heating film. When the temperature of the first energy storage component 1112 is lower than the predetermined temperature, the control circuit 1128 may control the heating film to heat the first energy storage component 1112 itself.

As illustrated in FIG. 1, in some embodiments, the management system 110 further includes a temperature detection circuit 1136. The temperature detection circuit 1136 is connected to the first energy storage component 1112 and the control circuit 1128, and is configured to detect the temperature of the first energy storage component 1112.

In this way, the temperature of the first energy storage component 1112 may be detected by the temperature detection circuit 1136. In an exemplary embodiment of the present disclosure, the temperature detection circuit 1136 may be connected to the control circuit 1128, and the temperature detection circuit 1136 may transmit detected temperature information of the first energy storage component 1112 to the control circuit 1128, in such a manner that the control circuit 1128 may realize corresponding control, for example, controlling the heating control circuit 1134 to heat the first energy storage component 1112, based on the temperature of the first energy storage component 1112.

In some embodiments, the management system 110 further includes a first current detection circuit and a second current detection circuit. The first current detection circuit is configured to detect a current output by the first energy storage component 1112 to the battery interface 1114. The second current detection circuit is configured to detect a current output by the first energy storage component 1112 to the load interface 1116.

In this way, the current output by the first energy storage component 1112 to the battery interface 1114 and the current output by the first energy storage component 1112 to the load interface 1116 may be detected by the first current detection circuit and the second current detection circuit, respectively.

In some embodiments, the electrical device 1300 includes a starter. The management system 110 further includes a second energy storage component (not illustrated in figures) configured to be connected in parallel with the first energy storage component 1112, to supply power to the starter in response to the vehicle 11000 being started.

In this way, the second energy storage component may be used to enhance starting capability of the vehicle 11000.

In an exemplary embodiment of the present disclosure, the second energy storage component may be a super capacitor. When it is detected that the vehicle 11000 is to be started, the super capacitor may be connected in parallel with the first energy storage component 1112, in such a manner that the starter may be powered to assist the starter in ignition. When the vehicle 11000 is not started, the first energy storage component 1112 is separated from the second energy storage component, and is not connected in parallel with the second energy storage component. In addition, a direct current charging circuit (DC-DC conversion circuit) is provided between the first energy storage component 1112 and the second energy storage component, and the first energy storage component 1112 may charge the second energy storage component through the direct current charging circuit.

As illustrated in FIG. 1 and FIG. 2, the management system 110 provided in an embodiment of the present disclosure may be applied to the vehicle battery 1100. The management system 110 includes the first energy component 1112, the battery interface 1114, the load interface 1116, the energy storage component management circuit 1118, the over-discharge protection switch circuit 11221, and the load discharge switch circuit 1124. The first energy storage component 1112 is capable of supplying power to the electrical device 1300 of the vehicle 11000 through the battery interface 1114. The first energy storage component 1112 is capable of supplying power to the load through the load interface 1116. The over-discharge protection switch circuit 11221 is connected to the first energy storage component 1112 and the battery interface 1114. The load discharge switch circuit 1124 is connected to the first energy storage component 1112 and the load interface 1116. The energy storage component management circuit 1118 is connected to the over-discharge protection switch circuit 11221 and the load discharge switch circuit 1124. The energy storage component management circuit 1118 is configured to control the over-discharge protection switch circuit 11221 and the load discharge switch circuit 1124 respectively based on the electric charge of the first energy storage component 1112.

In the management system 110 provided in an embodiment of the present disclosure, the first energy storage component 1112 may be discharged through the battery interface 1114 and the load interface 1116 respectively. The battery interface 1114 and the load interface 1116 may be used as the over-discharge protection points separately. The connection/disconnection between the first energy storage component 1112 and the battery interface 1114 may be controlled by controlling the over-discharge protection switch circuit 11221. The connection/disconnection between the first energy storage component 1112 and the load interface 1116 may be controlled by controlling the load discharge switch circuit 1124. In this way, the load is prevented from discharging the first energy storage component 1112 to the excessively low electric charge, which would otherwise cause the electrical device 1300 of the vehicle 11000 (such as the starter) to fail to start normally, ensuring the vehicle 11000 to be used normally.

As illustrated in FIG. 1, in some embodiments, the energy storage component management circuit 1118 includes a first control terminal 11181 and a second control terminal 11182. The first control terminal 11181 is connected to the over-discharge protection switch circuit 11221. The second control terminal 11182 is connected to the load discharge switch circuit 1124.

In this way, the energy storage component management circuit 1118 may control the over-discharge protection switch circuit 11221 and the load discharge switch circuit 1124 through the first control terminal 11181 and the second control terminal 11182.

In some embodiments, the energy storage component management circuit 1118 is configured to disconnect the load discharge switch circuit 1124 when the electric charge of the first energy storage component 1112 is less than the first predetermined electric charge, to disconnect the first energy storage component 1112 from the load interface 1116.

In this way, when the electric charge of the first energy storage component 1112 is less than the first predetermined electric charge, the energy storage component management circuit 1118 disconnects the first energy storage component 1112 from the load interface 1116, to avoid the over-discharge problem of the first energy storage component.

In some embodiments, the over-discharge protection switch circuit 11221 is connected to the first energy storage component 1112 and the battery interface 1114. The energy storage component management circuit 1118 is configured to disconnect the over-discharge protection switch circuit 11221 when the electric charge of the first energy storage component 1112 is less than the second predetermined electric charge, to disconnect the first energy storage component 1112 from the battery interface 1114. The first predetermined electric charge is greater than the second predetermined electric charge.

In this way, when the electric charge of the first energy storage component 1112 is less than the second predetermined electric charge, the energy storage component management circuit 1118 disconnects the first energy storage component 1112 from the battery interface 1114, to avoid the over-discharge problem of the first energy storage component.

The battery interface 1114 and the load interface 1116 are separately disposed, in such a manner that the energy storage component management circuit 1118 may use the battery interface 1114 and the load interface 1116 as the over-discharge protection points respectively, that is, the load interface 1116 is used as the over-discharge point 1, and the battery interface 1114 is used as the over-discharge point 2. When the electric charge of the first energy storage component 1112 is less than the first predetermined electric charge, the energy storage component management circuit 1118 disconnects the first energy storage component 1112 from the load interface 1116 to avoid the over-discharge problem of the first energy storage component. When the electric charge of the first energy storage component 1112 is less than the second predetermined electric charge, the energy storage component management circuit 1118 disconnects the first energy storage component 1112 from the battery interface 1114 to avoid the over-discharge problem of the first energy storage component. The first predetermined electric charge is, for example, 15%, and the second predetermined electric charge is, for example, 5%. In this way, the load may only use the electric charge of the first energy storage component 1112 down to the first predetermined electric charge. In this case, the electrical device 1300 of the vehicle 11000 may still start normally, for example, the starter may still ignite and start normally, ensuring the normal use of the vehicle 11000. By reasonably allocating and setting the different over-discharge points, the electric charge of the first energy storage component may be fully managed to work within the reasonable range, improving the experience effect of the product.

As illustrated in FIG. 2, the vehicle battery 1100 provided in an embodiment of the present disclosure includes the management system 110 according to any one of the above-described embodiments and a housing 120. The management system 110 is disposed in the housing 120.

The first energy storage component 1112, the energy storage component management circuit 1118, etc. may be integrated together to form the management system 110. The management system 110 is disposed in the housing 120 to form the vehicle battery 1100. The vehicle battery 1100 may be used as a 24V iron-lithium battery to replace a lead-acid battery.

The first energy storage component 1112 includes at least one of a battery cell or a capacitor. In an embodiment of the present disclosure, the first energy storage component 1112 is the battery cell.

As illustrated in FIG. 2, the vehicle 11000 provided in an embodiment of the present disclosure includes the above-described vehicle battery 1100 and the electrical device 1300. The vehicle battery 1100 is capable of supplying power to the electrical device 1300.

In the vehicle battery 1100 and the vehicle 11000 provided in an embodiment of the present disclosure, the first energy storage component 1112 may be discharged through the battery interface 1114 and the load interface 1116 respectively. The battery interface 1114 and the load interface 1116 may be used as the over-discharge protection points separately. When the electric charge of the first energy storage component 1112 is less than the first predetermined electric charge, the energy storage component management circuit 1118 disconnects the first energy storage component 1112 from the load interface 1116 to avoid the over-discharge problem of the first energy storage component. When the electric charge of the first energy storage component 1112 is less than the second predetermined electric charge, the energy storage component management circuit 1118 disconnects the first energy storage component 1112 from the battery interface 1114 to avoid the over-discharge problem of the first energy storage component. The first predetermined electric charge is greater than the second predetermined electric charge. In this way, the load is prevented from discharging the first energy storage component 1112 to the excessively low electric charge, which would otherwise cause the electrical device 1300 of the vehicle 11000 (such as the starter) to fail to start normally, ensuring the vehicle 11000 to be used normally.

In the related art, a power supply device may be charged and discharged through a MOS switch. When a large current passes through the MOS switch, the large current is likely to damage the MOS switch.

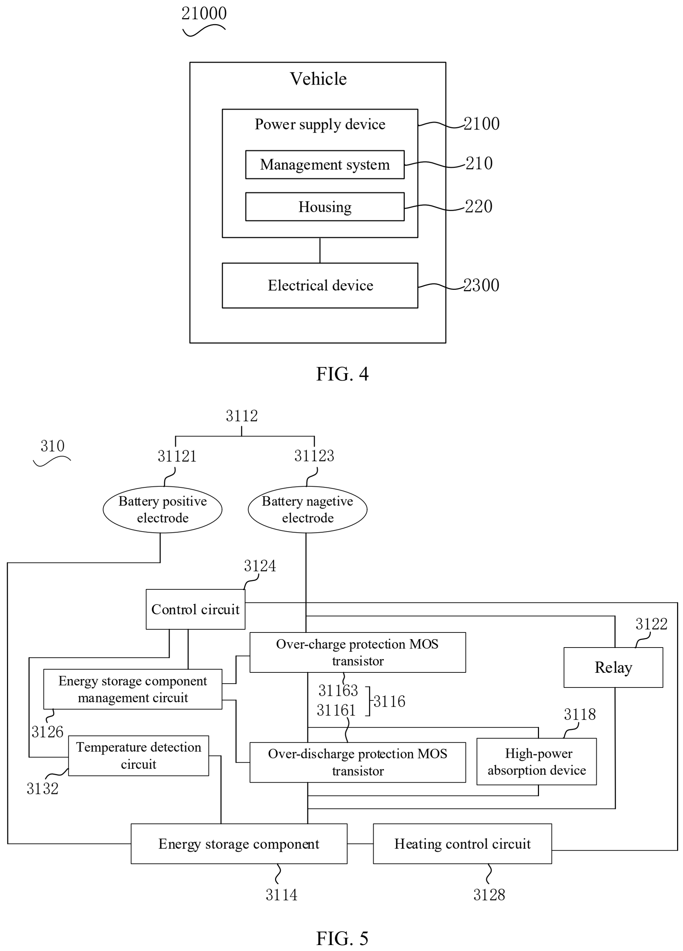

As illustrated in FIG. 3 and FIG. 4, a management system 210 provided in an embodiment of the present disclosure may be applied to a power supply device 2100. The management system 210 includes an energy storage component 2112, a battery interface 2114, a MOS transistor 2116, a relay 2118, and a control circuit 2122. The energy storage component 2112 is configured to supply power to an electrical device 2300 of a vehicle 21000 through the battery interface 2114. The MOS transistor 2116 is connected to the energy storage component 2112 and the battery interface 2114. The relay 2118 is connected in parallel with the MOS transistor 2116. The control circuit 2122 is configured to turn on the relay 2118 and the MOS transistor 2116, to enable the energy storage component 2112 to supply power to the electrical device 2300 through the battery interface 2114.

In the management system 210 provided in an embodiment of the present disclosure, the control circuit 2122 is capable of turning on the relay 2118 to shunt current for the MOS transistor 2116, to prevent the MOS transistor 2116 from being damaged by a large current.

In some embodiments, the power supply device 2100 includes a starting power supply or a vehicle battery. In an exemplary embodiment of the present disclosure, the power supply device 2100 includes a 24V starting power supply or a 24V vehicle battery. A 12V relay 2118 may be used to shunt current for the MOS transistor 2116. The 12V relay 2118 is applied to the 24V starting power supply or the 24V vehicle battery, which may greatly reduce a cost of the relay 2118.

In some embodiments, the energy storage component 2112 includes at least one of a battery cell or a capacitor. In an embodiment of the present disclosure, the energy storage component 2112 is the battery cell.

The electrical device 2300 of the vehicle 21000 includes a starter, a vehicle computer, vehicle lights, an audio system, etc. The energy storage component 2112 is capable of supplying power to the starter, the vehicle computer, the vehicle lights, the audio system, etc. through the battery interface 2114. For example, the energy storage component 2112 is capable of supplying power to the starter through the battery interface 2114 to assist the starter in ignition.

The control circuit 2122 may include at least one of an energy storage component management circuit 2124 or a control module. A control function in an embodiment may be completed by the energy storage component management circuit 2124 or the control module separately, or may be completed by the energy storage component management circuit 2124 and the control module together. The energy storage component management circuit 2124 may include an energy storage component BMS management circuit. The control module may be a single-chip microcomputer circuit or a driver board, and the driver board may include a Central Processing Unit (CPU), a Microcontroller Unit (MCU), other general-purpose processors, a Digital Signal Processor (DSP), an Application Specific Integrated Circuit (ASIC), a Field-Programmable Gate Array (FPGA) or other programmable logic devices, discrete gates or transistor logic devices, discrete hardware components, etc.

In an embodiment of the present disclosure, the control circuit 2122 is the single-chip microcomputer circuit. The energy storage component management circuit 2124 is controlled by the control circuit 2122. The energy storage component management circuit 2124 and the control circuit 2122 jointly realize the control function in the embodiment.

In some embodiments, the control circuit 2122 is configured to turn on the relay 2118 when an output current of the energy storage component 2112 through the MOS transistor 2116 is within a first predetermined output current range.

In this way, when a large current is output, the relay 2118 is turned on to shunt current for the MOS transistor 2116, preventing the large current from damaging the MOS transistor 2116.

In an exemplary embodiment of the present disclosure, the energy storage component 2112 is capable of supplying power to the electrical device 2300 through the battery interface 2114, and an external power supply is also capable of charging a battery cell 112 through the battery interface 2114. Under a low temperature condition, the vehicle needs to output a large current for a long time (that is, the output current is within the first predetermined output current range), and the large current easily causes a high temperature protection for the MOS transistor 2116. Two terminals of the MOS transistor 2116 are connected in parallel with the relay 2118, and the relay 2118 may be used as a bypass switch of a large current loop to shunt current for the MOS transistor 2116, effectively avoiding the MOS transistor 2116 from triggering a MOS high temperature protection due to a long-term large current.

In some embodiments, the control circuit 2122 is configured to turn on the MOS transistor 2116 and turn off the relay 2118 when the output current of the energy storage component 2112 through the MOS transistor 2116 is within a second predetermined output current range. The first predetermined output current range is greater than the second predetermined output current range. The first predetermined output current range is a current range for ignition of the vehicle 21000. The second predetermined output current range is a current range for normal operation of the vehicle 21000.

In this way, the energy storage component 2112 may be controlled and protected by the MOS transistor 2116 when a current output is normal. In an exemplary embodiment of the present disclosure, the first predetermined output current range is the current range for ignition of the vehicle 21000. A long-term large current output is easy to damage the MOS transistor 2116. Therefore, the relay 2118 may be turned on for shunting current. The second predetermined output current range is the current range for the normal operation of the vehicle 21000. When the current output is normal, the MOS transistor 2116 may be used to control and protect the energy storage component 2112. For example, in a case where the energy storage component 2112 is over-discharged, the MOS transistor 2116 may be disconnected, in such a manner that the energy storage component 2112 is not discharged to protect the energy storage component 2112. In a case where the energy storage component 2112 is over-charged, the MOS transistor 2116 may be disconnected, in such a manner that the energy storage component 2112 is not charged to protect the energy storage component 2112.

In some embodiments, the control circuit 2122 is configured to turn off the MOS transistor 2116 and the relay 2118 when the output current of the energy storage component 2112 through the MOS transistor 2116 is within a third predetermined output current range. The third predetermined output current range is greater than the first predetermined output current range.

In this way, when the current output is abnormal, the MOS transistor 2116 and the relay 2118 may be turned off to avoid damage to devices in a loop.

In an exemplary embodiment of the present disclosure, the third predetermined output current range may be a current range when the loop is short-circuited. When the loop is short-circuited, the output current of the energy storage component 2112 is very large, which easily causes damage to the devices in the loop. Therefore, the MOS transistor 2116 and the relay 2118 may be turned off, that is, the loop is disconnected, to protect the devices in the loop.

In some embodiments, the management system 210 further includes a current detection circuit (not illustrated in the figures). The current detection circuit is configured to detect a current output by the energy storage component 2112 to the battery interface 2114. The current detection circuit is connected to the control circuit 2122.

In this way, the current output by the energy storage component 2112 to the battery interface 2114 may be detected by the current detection circuit.

In some embodiments, the control circuit 2122 is further configured to turn on the relay 2118 and turn off the MOS transistor 2116.

In this way, the MOS transistor 2116 is further prevented from being damaged by a large current.

In an exemplary embodiment of the present disclosure, the control circuit 2122 is configured to turn on the relay 2118 when the output current of the energy storage component 2112 through the MOS transistor 2116 is within the first predetermined output current range and the MOS transistor 2116 is in an on state. In this way, performance requirements for the relay 2118 are relatively low. For example, when the energy storage component 2112 has a voltage of 24V, the relay 2118 may use a 12V relay. Subsequent to turning on the relay 2118, the MOS transistor 2116 may be turned off, in such a manner that the relay 2118 is used as an independent electronic switch of the loop to bear a large current of the loop, further preventing the MOS transistor 2116 from being damaged by the large current.

As illustrated in FIG. 3, in some embodiments, the MOS transistor 2116 includes an over-discharge protection MOS transistor 21161 and an over-charge protection MOS transistor 21162 that are connected in series. The over-discharge protection MOS transistor 21161 and the over-charge protection MOS transistor 21162 are connected to the energy storage component 2112 and the battery interface 2114.

In this way, the energy storage component 2112 may be protected by the over-discharge protection MOS transistor 21161 and the over-charge protection MOS transistor 21162.

In an exemplary embodiment of the present disclosure, the over-discharge protection MOS transistor 21161 and the over-charge protection MOS transistor 21162 are connected to the energy storage component 2112 and the battery interface 2114. The over-discharge protection MOS transistor 21161 may protect the energy storage component 2112 to prevent the energy storage component 2112 from being over-discharged. The over-charge protection MOS transistor 21162 may protect the energy storage component 2112 to prevent the energy storage component 2112 from being over-charged.

In some embodiments, the battery interface 2114 includes a battery positive electrode 21141 and a battery negative electrode 21142. The energy storage component 2112 is connected to the battery positive electrode 21141, and the over-discharge protection MOS transistor 21161 and the over-charge protection MOS transistor 21162 are connected to the energy storage component 2112 and the battery negative electrode 21142.

In some embodiments, the management system 210 further includes a heating control circuit 2126. The heating control circuit 2126 is configured to heat the energy storage component 2112. The control circuit 2122 is connected to the heating control circuit 2126, and is configured to control the heating control circuit 2126 to heat the energy storage component 2112 when a temperature of the energy storage component 2112 is lower than a predetermined temperature.

In this way, under a low temperature condition, the energy storage component 2112 may be heated by controlling the heating control circuit 2126, to enable the energy storage component 2112 to obtain a good charging or discharging operating temperature range.

In an exemplary embodiment of the present disclosure, the heating control circuit 2126 includes a heating film. When the temperature of the energy storage component 2112 is lower than the predetermined temperature, the control circuit 2122 may control the heating film to heat the energy storage component 2112 itself.

In some embodiments, the management system 210 further includes a temperature detection circuit 2128. The temperature detection circuit 2128 is connected to the energy storage component 2112 and the control circuit 2122, and is configured to detect the temperature of the energy storage component 2112.

In this way, the temperature of the energy storage component 2112 may be detected by the temperature detection circuit 2128. In an exemplary embodiment of the present disclosure, the temperature detection circuit 2128 may be connected to the control circuit 2122, and the temperature detection circuit 2128 may transmit detected temperature information of the energy storage component 2112 to the control circuit 2122, in such a manner that the control circuit 2122 may realize corresponding control, for example, controlling the heating control circuit 2126 to heat the energy storage component 2112, based on the temperature of the energy storage component 2112.

In some embodiments, the management system 210 further includes at least one of: the temperature detection circuit 2128 connected to the control circuit 2122, and configured to detect a temperature of at least one of the energy storage component 2112, the relay 2118, or the MOS transistor 2116; a reverse detection circuit (not illustrated in the figures) connected to the control circuit 2122 and the battery interface 2114, and configured to detect whether the battery interface 2114 is reversely connected to the electrical device 2300; a correctness detection circuit (not illustrated in the figures) connected to the control circuit 2122 and the battery interface 2114, and configured to detect whether the battery interface 2114 is correctly connected to the electrical device 2300; a short circuit detection circuit (not illustrated in the figures) connected to the control circuit 2122 and battery interface 2114, and configured to detect whether the battery interface 2114 is short-circuited; or an external load status detection circuit (not illustrated in the figures) connected to the control circuit 2122 and the battery interface 2114, and configured to detect whether the battery interface 2114 is connected to the vehicle 21000.

In this way, functions of the management system 210 may be enriched.

In an exemplary embodiment of the present disclosure, the temperature detection circuit 2128 is configured to detect the temperature of at least one of the energy storage component 2112, the relay 2118, or the MOS transistor 2116. In this way, the control circuit 2122 may perform a corresponding control function based on a temperature detection result, to make the management system 210 more intelligent and safer. The reverse detection circuit is configured to detect whether the battery interface 2114 is reversely connected to the electrical device 2300. When the battery interface 2114 is reversely connected to the electrical device 2300, the control circuit 2122 is configured to disconnect the battery interface 2114 from the electrical device 2300, to avoid damage to the battery interface 2114 and the electrical device 2300. The correctness detection circuit is configured to detect whether the battery interface 2114 is correctly connected to the electrical device 2300. When the battery interface 2114 is correctly connected to the electrical device 2300, the control circuit 2122 is configured to control the battery interface 2114 to output normally. The short circuit detection circuit is configured to detect whether the battery interface 2114 is short-circuited. When the battery interface 2114 is short-circuited, the control circuit 2122 is configured to disconnect the battery interface 2114 to avoid damage to the battery interface 2114. The external load status detection circuit is configured to detect whether the battery interface 2114 is connected to the vehicle 21000. When the battery interface 2114 is connected to the vehicle 21000, the control circuit 2122 is configured to control the battery interface 2114 to output normally.

As illustrated in FIG. 4, the power supply device 2100 provided in an embodiment of the present disclosure includes the management system 210 according to any one of the above-described embodiments and a housing 220. The management system 210 is disposed in the housing 220.

The energy storage component 2112, the battery interface 2114, the MOS transistor 2116, the relay 2118, the control circuit 2122, etc. may be integrated together to form the management system 210. The management system 210 is disposed in the housing 220 to form the power supply device 2100. The power supply device 2100 may be a 24V iron- lithium battery to replace a lead-acid battery.

In some embodiments, the power supply device 2100 further includes a battery clamp.

In this way, the power supply device 2100 may be connected to the vehicle 21000 and the electrical device 2300 in the vehicle 21000 through the battery clamp.

The vehicle 21000 provided in an embodiment of the present disclosure includes the above-described power supply device 2100 and the electrical device 2300. The power supply device 2100 is capable of supplying power to the electrical device 2300.

In the power supply device 2100 and the vehicle 21000 provided in an embodiment of the present disclosure, the control circuit 2122 is capable of turning on the relay 2118 to shunt current for the MOS transistor 2116, to prevent the MOS transistor 2116 from being damaged by the large current.

In the related art, the power supply device may be charged and discharged through the MOS transistor. When the power supply device is discharged with a large current through the MOS transistor, turning off the MOS transistor may generate a reverse spike voltage and break down the MOS transistor (reverse electromotive force burns DS of the MOS transistor). Therefore, a MOS transistor with a higher withstand voltage and a higher price needs to be selected. For example, for a 24V lithium battery product, the MOS transistor generally adopts a power device with a 60V withstand voltage (DS withstand voltage) specification, which is configured to provide output shutdown protection for the battery after over-discharge, over-current, short circuit, and over-temperature. However, a price and an internal resistance of a 60V withstand voltage MOS transistor are relatively high, and cost performance is low. When a normal large current is discharged, a temperature of the MOS transistor rises.

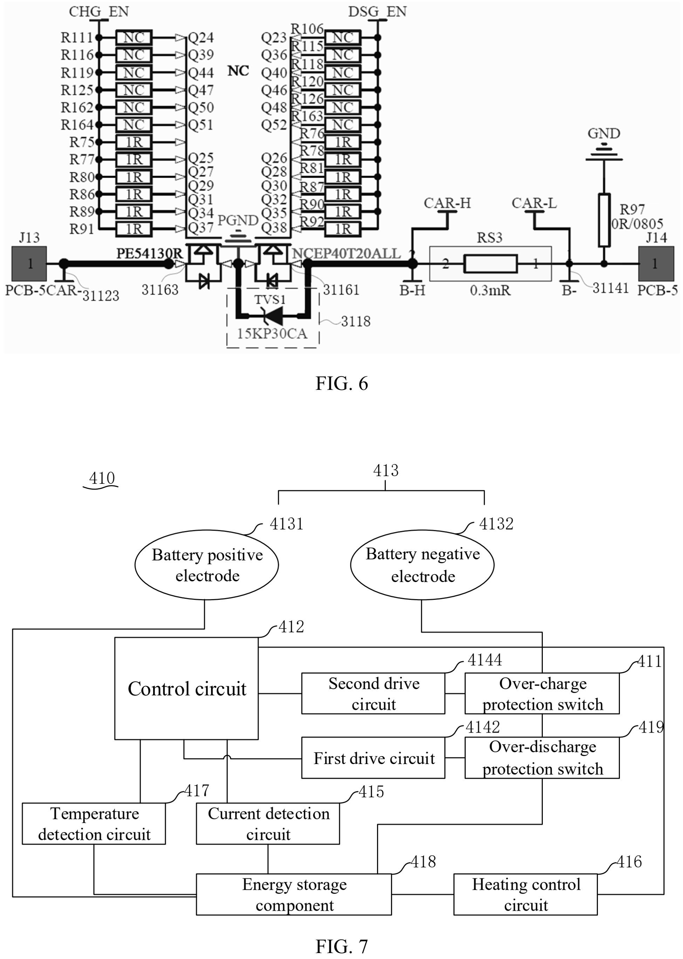

As illustrated in FIG. 5 and FIG. 6, a power supply device 310 provided in an embodiment of the present disclosure includes a battery interface 3112, a MOS transistor 3116, and a high-power absorption device 3118. The battery interface 3112 is configured to be connected to an energy storage component 3114. The energy storage component 3114 is configured to supply power to an electrical device of a vehicle through the battery interface 3112. The MOS transistor 3116 is configured to be connected to the energy storage component 3114 and the battery interface 3112. The high-power absorption device 3118 is connected in parallel with the MOS transistor 3116, and configured to enable a voltage of the MOS transistor 3116 to be less than a predetermined voltage.

In the power supply device 310 provided in an embodiment of the present disclosure, the high-power absorption device 3118 is arranged in parallel with the MOS transistor 3116. The high-power absorption device 3118 is configured to clamp the voltage of the MOS transistor 3116, to enable the voltage of the MOS transistor 3116 to be less than the predetermined voltage, effectively preventing the reverse spike voltage generated due to shutdown of the MOS transistor 3116 from breaking down the MOS transistor 3116. Under a condition of a same shutdown protection current, voltage selection of the MOS transistor 3116 may be reduced from a withstand voltage of 60V to 40V, and a device with a lower internal resistance may be selected, which effectively reduces temperature rise of the MOS transistor 3116 when a large current is discharged, and reduces a procurement cost of the MOS transistor 3116.

The high-power absorption device 3118 has a suitable absorption voltage and is connected in parallel with the MOS transistor 3116. Therefore, the reverse electromotive force generated by a loop when the MOS transistor 3116 with a large current is turned off may be effectively absorbed, preventing DS terminals of the MOS transistors 3116 from being damaged and broken down due to a high voltage.

In some embodiments, the power supply device 310 includes a starting power supply or a vehicle battery. In an exemplary embodiment of the present disclosure, the power supply device 310 includes a 24V starting power supply or a 24V vehicle battery.

In some embodiments, the power supply device 310 further includes the energy storage component 3114. The energy storage component 3114 includes at least one of a battery cell or a capacitor. In an embodiment of the present disclosure, the energy storage component 3114 is the battery cell.

The battery interface 3112, the energy storage component 3114, the MOS transistor 3116, the high-power absorption device 3118, etc. may be integrated together to form the power supply device 310. The power supply device 310 may be a 24V iron-lithium battery to replace a lead-acid battery.

The electrical device includes a starter, a vehicle computer, vehicle lights, an audio system, etc. The energy storage component 3114 is capable of supplying power to the starter, the vehicle computer, the vehicle lights, the audio system, etc. through the battery interface 3112. For example, the energy storage component 3114 is capable of supplying power to the starter through the battery interface 3112 to assist the starter in ignition.

In some embodiments, the MOS transistor 3116 includes a discharge MOS transistor 31161 (over-discharge protection MOS transistor). The discharge MOS transistor 31161 includes a source and a drain. The high-power absorption device 3118 is connected to the source and the drain of the discharge MOS transistor 31161. The high-power absorption device 3118 is configured to operate when a voltage between the source and the drain of the MOS transistor 3116 is greater than the predetermined voltage, to enable the voltage between the source and the drain of the MOS transistor 3116 to be less than the predetermined voltage.

In this way, when the discharge MOS transistor 3116 with a large current is turned off, the voltage between the source and the drain of the MOS transistor 3116 is greater than the predetermined voltage. At this time, the high-power absorption device 3118 may operate and effectively absorb the reverse electromotive force, to enable the voltage between the source and the drain of the MOS transistor 3116 to be less than the predetermined voltage, which effectively prevents the reverse spike voltage generated by the MOS transistor 3116 being turned off from breaking down the MOS transistor 3116.

In some embodiments, the high-power absorption device 3118 includes a transient voltage suppressor (TVS). The TVS is configured to clamp the voltage of the MOS transistor 3116 when the voltage of the MOS transistor 3116 is greater than the predetermined voltage.

In this way, the TVS may be adopted to clamp the voltage of MOS transistor 3116, to enable the voltage of MOS transistor 3116 to be less than the predetermined voltage, effectively preventing the reverse spike voltage generated by the MOS transistor 3116 being turned off from breaking downing the MOS transistor 3116.

In an exemplary embodiment of the present disclosure, when the discharge MOS transistor 3116 with a large current is turned off, the voltage between the source and the drain of the MOS transistor 3116 is greater than the predetermined voltage. The predetermined voltage may be a breakdown voltage of the TVS. When the voltage between the source and the drain of the MOS transistor 3116 is greater than the breakdown voltage of the TVS, the TVS will break down and clamp the voltage across the DS terminals of the MOS transistor 3116, effectively avoiding a problem of breakdown of a DS withstand voltage caused by the reverse spike voltage generated when the MOS transistor 3116 with a large current is turned off.

In some embodiments, the power supply device 310 further includes a relay 3122 and a control circuit 3124. The relay 3122 is connected in parallel with the MOS transistor 3116. The control circuit 3124 is configured to turn on the relay 3122 and the MOS transistor 3116, to enable the energy storage component 3114 to supply power to the electrical device through the battery interface 3112.

In this way, the control circuit 3124 is capable of turning on the relay 3122 to shunt current for the MOS transistor 3116, to prevent the MOS transistor 3116 from being damaged by the large current.

A 12V relay 3122 may be used to shunt current for the MOS transistor 3116. The 12V relay 3122 is applied to the 24V starting power supply or the 24V vehicle battery, which may greatly reduce a cost of the relay 3122.

The control circuit 3124 may include at least one of an energy storage component management circuit 3126 or a control module. A control function in an embodiment may be completed by the energy storage component management circuit 3126 or the control module separately, or may be completed by the energy storage component management circuit 3126 and the control module together. The energy storage component management circuit 3126 may include an energy storage component BMS management circuit. The control module may be a single-chip microcomputer circuit or a driver board, and the driver board may include a Central Processing Unit (CPU), a Microcontroller Unit (MCU), other general-purpose processors, a Digital Signal Processor (DSP), an Application Specific Integrated Circuit (ASIC), a Field-Programmable Gate Array (FPGA) or other programmable logic devices, discrete gates or transistor logic devices, discrete hardware components, etc.

In an embodiment of the present disclosure, the control circuit 3124 is the single-chip microcomputer circuit. The energy storage component management circuit 3126 is controlled by the control circuit 3124. The energy storage component management circuit 3126 and the control circuit 3124 jointly realize the control function in the embodiment.

In some embodiments, the control circuit 3124 is configured to turn on the relay 3122 when an output current of the energy storage component 3114 through the MOS transistor 3116 is within a first predetermined output current range.

In this way, when a large current is output, the relay 3122 is turned on to shunt current for the MOS transistor 3116, preventing the large current from damaging the MOS transistor 3116.

In an exemplary embodiment of the present disclosure, the energy storage component 3114 is capable of supplying power to the electrical device through the battery interface 3112, and an external power supply is also capable of charging the energy storage component 3114 through the battery interface 3112. Under a low temperature condition, the vehicle needs to output a large current for a long time (that is, the output current is within the first predetermined output current range), and the large current easily causes a high temperature protection of the MOS transistor 3116. Two terminals of the MOS transistor 3116 are connected in parallel with the relay 3122, and the relay 3122 may be used as a bypass switch of a large current loop to shunt current for the MOS transistor 3116, effectively avoiding the MOS transistor 3116 from triggering a MOS high temperature protection due to a long-term large current.

In some embodiments, the control circuit 3124 is configured to turn on the MOS transistor 3116 and turn off the relay 3122 when the output current of the energy storage component 3114 through the MOS transistor 3116 is within a second predetermined output current range. The first predetermined output current range is greater than the second predetermined output current range. The first predetermined output current range is a current range for ignition of the vehicle. The second predetermined output current range is a current range for normal operation of the vehicle.

In this way, the energy storage component 3114 may be controlled and protected by the MOS transistor 3116 when a current output is normal. In an exemplary embodiment of the present disclosure, the first predetermined output current range is the current range for ignition of the vehicle. A long-term large current output is easy to damage the MOS transistor 3116. Therefore, the relay 3122 may be turned on for shunting current. The second predetermined output current range is the current range for the normal operation of the vehicle. When the current output is normal, the MOS transistor 3116 may be used to control and protect the energy storage component 3114. For example, in a case where the energy storage component 3114 is over-discharged, the MOS transistor 3116 may be disconnected, in such a manner that the energy storage component 3114 is not discharged to protect the energy storage component 3114. In a case where the energy storage component 3114 is over-charged, the MOS transistor 3116 may be disconnected, in such a manner that the energy storage component 3114 is not charged to protect the energy storage component 3114.

In some embodiments, the control circuit 3124 is configured to turn off the MOS transistor 3116 and the relay 3122 when the output current of the energy storage component 3114 through the MOS transistor 3116 is within a third predetermined output current range. The third predetermined output current range is greater than the first predetermined output current range.

In this way, when the current output is abnormal, the MOS transistor 3116 and the relay 3122 may be turned off to avoid damage to devices in a loop.

In an exemplary embodiment of the present disclosure, the third predetermined output current range may be a current range when the loop is short-circuited. When the loop is short-circuited, the output current of the energy storage component 3114 is very large, which easily causes damage to the devices in the loop. Therefore, the MOS transistor 3116 and the relay 3122 may be turned off, that is, the loop is disconnected, to protect the devices in the loop.

In some embodiments, the power supply device 310 further includes a current detection circuit (not illustrated in the figures). The current detection circuit is configured to detect a current output by the energy storage component 3114 to the battery interface 3112. The current detection circuit is connected to the control circuit 3124.

In this way, the current output by the energy storage component 3114 to the battery interface 3112 may be detected by the current detection circuit.

In some embodiments, the control circuit 3124 is further configured to turn on the relay 3122 and turn off the MOS transistor 3116.

In this way, the MOS transistor 3116 is further prevented from being damaged by a large current.

In an exemplary embodiment of the present disclosure, the control circuit 3124 is configured to turn on the relay 3122 when the output current of the energy storage component 3114 through the MOS transistor 3116 is within the first predetermined output current range and the MOS transistor 3116 is in an on state. In this way, performance requirements for the relay 3122 are relatively low. For example, when the energy storage component 3114 has a voltage of 24V, the relay 3122 may use a 12V relay. Subsequent to turning on the relay 3122, the MOS transistor 3116 may be turned off, in such a manner that the relay 3122 is used as an independent electronic switch of the loop to bear a large current of the loop, further preventing the MOS transistor 3116 from being damaged by the large current.

In some embodiments, the MOS transistor 3116 includes an over-discharge protection MOS transistor 31161 and an over-charge protection MOS transistor 31163 that are connected in series. The over-discharge protection MOS transistor 31161 and the over-charge protection MOS transistor 31163 are connected to the energy storage component 3114 and the battery interface 3112.

In this way, the energy storage component 3114 may be protected by the over-discharge protection MOS transistor 31161 and the over-charge protection MOS transistor 31163.

In an exemplary embodiment of the present disclosure, the over-discharge protection MOS transistor 31161 and the over-charge protection MOS transistor 31163 are connected to the energy storage component 3114 and the battery interface 3112. A discharge MOS transistor 31161 may include the over-discharge protection MOS transistor 31161. The over-discharge protection MOS transistor 31161 may protect the energy storage component 3114, to prevent the energy storage component 3114 from being over-discharged. The over-charge protection MOS transistor 31163 may protect the energy storage component 3114, to prevent the energy storage component 3114 from being over-charged.

In some embodiments, the battery interface 3112 includes a battery positive electrode 31121 and a battery negative electrode 31123. The energy storage component 3114 is connected to the battery positive electrode 31121, and the over-discharge protection MOS transistor 31161 and the over-charge protection MOS transistor 31163 are connected to the energy storage component 3114 and the battery negative electrode 31123. In an exemplary embodiment of the present disclosure, a positive electrode of the energy storage component 3114 is connected to the battery positive electrode 31121, and the over-discharge protection MOS transistor 31161 and the over-charge protection MOS transistor 31163 are connected to a negative electrode 31141 of the energy storage component 3114 and the battery negative electrode 31123.

In some embodiments, the power supply device 310 further includes a heating control circuit 3128. The heating control circuit 3128 is configured to heat the energy storage component 3114. The control circuit 3124 is connected to the heating control circuit 3128, and is configured to control the heating control circuit 3128 to heat the energy storage component 3114 when a temperature of the energy storage component 3114 is lower than a predetermined temperature.

In this way, under a low temperature condition, the energy storage component 3114 may be heated by controlling the heating control circuit 3128, to enable the energy storage component 3114 to obtain a good charging or discharging operating temperature range.

In an exemplary embodiment of the present disclosure, the heating control circuit 3128 includes a heating film. When the temperature of the energy storage component 3114 is lower than the predetermined temperature, the control circuit 3124 may control the heating film to heat the energy storage component 3114 itself.

In some embodiments, the power supply device 310 further includes a temperature detection circuit 3132. The temperature detection circuit 3132 is connected to the energy storage component 3114 and the control circuit 3124, and is configured to detect the temperature of the energy storage component 3114.

In this way, the temperature of the energy storage component 3114 may be detected by the temperature detection circuit 3132. In an exemplary embodiment of the present disclosure, the temperature detection circuit 3132 may be connected to the control circuit 3124, and the temperature detection circuit 3132 may transmit detected temperature information of the energy storage component 3114 to the control circuit 3124, in such a manner that the control circuit 3124 may realize corresponding control, for example, controlling the heating control circuit 3128 to heat the energy storage component 3114, based on the temperature of the energy storage component 3114.

In some embodiments, the power supply device 310 further includes at least one of: the temperature detection circuit 3132 connected to the control circuit 3124, and configured to detect a temperature of at least one of the energy storage component 3114, the relay 3122, or the MOS transistor 3116; a reverse detection circuit (not illustrated in the figures) connected to the control circuit 3124 and the battery interface 3112, and configured to detect whether the battery interface 3112 is reversely connected to the electrical device; a correctness detection circuit (not illustrated in the figures) connected to the control circuit 3124 and the battery interface 3112, and configured to detect whether the battery interface 3112 is correctly connected to the electrical device; a short circuit detection circuit (not illustrated in the figures) connected to the control circuit 3124 and battery interface 3112, and configured to detect whether the battery interface 3112 is short-circuited; or an external load status detection circuit (not illustrated in the figures) connected to the control circuit 3124 and the battery interface 3112, and configured to detect whether the battery interface 3112 is connected to the vehicle.

In this way, functions of the power supply device 310 may be enriched.

In an exemplary embodiment of the present disclosure, the temperature detection circuit 3132 is configured to detect the temperature of at least one of the energy storage component 3114, the relay 3122, or the MOS transistor 3116. In this way, the control circuit 3124 may perform a corresponding control function based on a temperature detection result, to make the power supply device 310 more intelligent and safer. The reverse detection circuit is configured to detect whether the battery interface 3112 is reversely connected to the electrical device. When the battery interface 3112 is reversely connected to the electrical device, the control circuit 3124 is configured to disconnect the battery interface 3112 from the electrical device, to avoid damage to the battery interface 3112 and the electrical device. The correctness detection circuit is configured to detect whether the battery interface 3112 is correctly connected to the electrical device. When the battery interface 3112 is correctly connected to the electrical device, the control circuit 3124 is configured to control the battery interface 3112 to output normally. The short circuit detection circuit is configured to detect whether the battery interface 3112 is short-circuited. When the battery interface 3112 is short-circuited, the control circuit 3124 is configured to disconnect the battery interface 3112, to avoid damage to the battery interface 3112. The external load status detection circuit is configured to detect whether the battery interface 3112 is connected to the vehicle. When the battery interface 3112 is connected to the vehicle, the control circuit 3124 is configured to control the battery interface 3112 to output normally.

In some embodiments, the power supply device 310 further includes a battery clamp.

In this way, the power supply device 310 may be connected to the vehicle and the electrical device in the vehicle through the battery clamp.

In the related art, an energy storage component may be charged by a charging device such as a vehicle generator. In response to the energy storage component reaching an over-charge protection condition, an over-charge protection switch is turned off, to stop charging and protect the energy storage component. However, the vehicle generator includes an excitation generator, and under a condition of a constant rotation speed, output voltage amplitude and current magnitude are adjusted by changing magnitude of a generator magnetic field. An entire adjustment process requires a certain response time. Suddenly turning off the over-charge protection switch may cause the vehicle generator to generate a voltage spike, and the voltage spike may trigger a high-voltage protection of a vehicle control system.

As illustrated in FIG. 7, a management system 410 provided in an embodiment of the present disclosure includes an over-charge protection switch 411 and a control circuit 412. The over-charge protection switch 411 is configured to be connected to an energy storage component 418. A control circuit 412 is configured to output a control signal in response to the energy storage component 418 reaching an over-charge protection condition. The control signal is configured to control the over-charge protection switch 411, to enable a charging current of the energy storage component 418 to decrease to a predetermined charging current. The control circuit 412 is further configured to turn off the over-charge protection switch 411 subsequent to the charging current of the energy storage component 418 decreasing to the predetermined charging current.

In an exemplary embodiment of the present disclosure, the control circuit 412 includes a MCU or a BMS management chip. The control circuit 412 is configured to output the control signal in response to the energy storage component 418 reaching the over-charge protection condition, to enable the charging current of the energy storage component 418 to decrease to the predetermined charging current. Subsequently, the control circuit 412 is configured to control the over-charge protection switch 411 to be turned off.

In this way, the over-charge protection switch 411 is controlled by the control signal, to enable the charging current of the energy storage component 418 to decrease to the predetermined charging current. The over-charge protection switch 411 is subsequently turned off, in such a manner that the charging device has sufficient time to adjust an output, avoiding delayed response of the charging device resulting from directly turning off the over-charge protection switch 411, and avoiding a voltage spike generated by the charging device.

In some embodiments, the control signal includes a PWM control signal. The PWM control signal is configured to control a switching frequency and a duty cycle of the over-charge protection switch 411, to enable the charging current of the energy storage component 418 to decrease to the predetermined charging current.

In an exemplary embodiment of the present disclosure, a PWM signal is a pulse amplitude modulation signal. The PWM signal is configured to control the switching frequency and the duty cycle of the over-charge protection switch 411, in such a manner that the over-charge protection switch 411 switches between an on state and an off state within a certain period of time, to reduce the charging current of the energy storage component 418 until the charging current of the energy storage component 418 decreases to the predetermined charging current.

In this way, the control circuit 412 is configured to control the switching frequency and the duty cycle of the over-charge protection switch 411 through the PWM signal, to enable the charging current of the energy storage component 418 to decrease to the predetermined charging current. The control circuit 412 is subsequently configured to turn off the over-charge protection switch 411, which avoids the delayed response of the charging device resulting from directly turning off the over-charge protection switch 411, and avoids the voltage spike generated by the charging device.

In some embodiments, the predetermined charging current ranges from 0.5A to 10A.

In an exemplary embodiment of the present disclosure, the predetermined charging current may be a pre-set current, and the predetermined charging current ranges from 0.5A to 10A. In an embodiment, the predetermined charging current is 3A. When the energy storage component 418 reaches the over-charge protection condition, the control circuit 412 is configured to output the PWM control signal to control the switching frequency and the duty cycle of the over-charge protection switch 411, which enables the charging current of the energy storage component 418 to decrease gradually. When the charging current of the energy storage component 418 decreases to 3A, the control circuit 412 is configured to control the over-charge protection switch 411 to be turned off, which stops charging the energy storage component 418.

In some embodiments, the management system 410 further includes a battery interface 413. The energy storage component 418 is charged through the battery interface 413. The over-charge protection switch 411 is connected to the energy storage component 418 and the battery interface 413.

In an exemplary embodiment of the present disclosure, the battery interface 413 includes a battery positive electrode 4131 and a battery negative electrode 4132. The energy storage component 418 is connected to the battery positive electrode 4131, and the over-charge protection switch 411 is connected to the energy storage component 418 and the battery negative electrode 4132.

In this way, the energy storage component 418 is charged through the battery interface 413 by providing the battery interface 413, and the energy storage component 418 is connected to the battery interface 413 by the over-charge protection switch 411, in such a manner that when the over-charge protection condition is reached, the over-charge protection switch 411 is controlled to be turned off to protect the energy storage component 418.

In some embodiments, the battery interface 413 is configured to be connected to a vehicle generator 4200.

In an exemplary embodiment of the present disclosure, the vehicle generator 4200 includes an excitation generator. Output voltage amplitude and current magnitude are adjusted by changing magnitude of a generator magnetic field under a condition of a constant rotation speed of the excitation generator, and an entire adjustment process requires a certain response time and belongs to a slow control system. In addition, prior to turning off the over-charge protection switch, the vehicle generator may also charge the energy storage component with a relatively large current. Therefore, if the over-charge protection switch is directly turned off when the voltage of the energy storage component is greater than the predetermined voltage, causing the vehicle generator to be suddenly disconnected from the energy storage component, the vehicle generator may generate a relatively large voltage spike, which may trigger the high-voltage protection of the vehicle control system.

In an embodiment, in response to the energy storage component 418 reaching the over-charge protection condition, the control circuit 412 is configured to output the PWM control signal to control the switching frequency and the duty cycle of the over-charge protection switch 411, which enables the charging current of the energy storage component 418 to decrease gradually. When the charging current of the energy storage component 418 decreases to the predetermined charging current, the control circuit 412 is configured to control the over-charge protection switch 411 to be turned off, which stops charging the energy storage component 418. In this way, the vehicle generator 4200 has sufficient time to adjust the magnetic field and control output amplitude, avoiding delayed response of the vehicle generator 4200 resulting from suddenly turning off the over-charge protection switch 411, and avoiding a high voltage spike.

In this way, the vehicle generator 4200 is configured to charge the energy storage component 418 through the battery interface 413, and output the control signal through the control circuit 412, to enable the charging current of the energy storage component 418 to decrease to the predetermined charging current. The control circuit 412 is configured to control the over-charge protection switch 411 to be turned off, to stop the vehicle generator 4200 from charging the energy storage component 418. Thus, over-charge protection of the energy storage component 418 is achieved while avoiding the voltage spike.

In some embodiments, the over-charge protection switch 411 includes a MOS transistor.

In an exemplary embodiment of the present disclosure, when a gate of the MOS transistor is input with a low level, the source and the drain of the MOS transistor are turned off, and the MOS transistor is turned off, that is, the over-charge protection switch 411 is turned off. When the gate of the MOS transistor is input with a high level, the source and the drain of the MOS transistor are turned on, and the MOS transistor is turned on, that is, the over-charge protection switch 411 is turned on. When the control circuit 412 outputs the PWM control signal, that is, a voltage input to the gate of the MOS transistor switches between a high level and a low level at a certain frequency, which enables the MOS transistor to switch an on-off state at a certain frequency, and the switching frequency and the duty cycle may be controlled, that is, the switching frequency and the duty cycle of the MOS transistor are controlled to enable the charging current of the energy storage component 418 to decrease.

In an embodiment, in response to the energy storage component 418 reaching the over-charge protection condition, the control circuit 412 is configured to output the PWM control signal, to control the switching frequency and the duty cycle of the MOS transistor. In this way, the charging current of the energy storage component 418 gradually decreases. When the charging current of the energy storage component 418 decreases to the predetermined charging current, the control circuit 412 is configured to control the MOS transistor to be turned off, which stops charging the energy storage component 418.

In this way, the MOS transistor may realize a function of the over-charge protection switch 411, and the on-off state may be changed based on the control signal of the control circuit 412, in such a manner that charging of the energy storage component 418 is stopped in response to the charging current of the energy storage component 418 decreasing to the predetermined charging current, to protect the energy storage component 418 and avoid the voltage spike.

In some embodiments, the over-charge protection condition includes: a voltage of the energy storage component 418 being greater than a predetermined voltage.

In an exemplary embodiment of the present disclosure, the predetermined voltage may be a pre-set voltage, which is not limited here. In an embodiment, when the voltage of the energy storage component 418 is greater than the predetermined voltage, the control circuit 412 is configured to output the PWM signal to control the switching frequency and the duty cycle of the MOS transistor, in such a manner that the charging current of the energy storage component 418 decreases to the predetermined charging current, and the control circuit 412 is configured to turn off the MOS transistor.

In this way, when the voltage of the energy storage component 418 is greater than the predetermined voltage, the control circuit 412 is configured to output the PWM signal to control the switching frequency and the duty cycle of the over-charge protection switch 411, to enable the charging current of the energy storage component 418 to decrease to the predetermined charging current. Subsequently, the over-charge protection switch 411 is turned off, to stop charging the energy storage component 418, which avoids the voltage spike that may trigger the high-voltage protection.

In some embodiments, the control circuit 412 is configured to determine the control signal based on the charging current of the energy storage component 418, and the control signal is configured to control the over-charge protection switch 411, to enable the charging current of the energy storage component 418 to decrease to the predetermined charging current within a predetermined time.

In an exemplary embodiment of the present disclosure, when the voltage of the energy storage component 418 is greater than the predetermined voltage and the charging current of the energy storage component 418 is greater than the predetermined charging current, the control circuit 412 is configured to output the PWM signal to switch the on-off state of the MOS transistor at the certain frequency. In this way, subsequent to the charging current of the energy storage component 418 decreasing to the predetermined charging current, the control circuit 412 is configured to control the MOS transistor to be turned off, that is, the over-charge protection switch 411 is turned off, and the charging of the energy storage component 418 is stopped, realizing over-charge protection for the energy storage component 418 and avoiding the voltage spike.

In this way, the control circuit 412 is configured to determine the control signal for controlling the over-charge protection switch 411 based on the charging current of the energy storage component 418, to enable the charging current of the energy storage component 418 to decrease to the predetermined charging current within the predetermined time.

In some embodiments, the management system 410 further includes the energy storage component 418. The energy storage component 418 includes a battery and/or a super capacitor. The battery includes a lead-acid battery and a lithium battery.

In some embodiments, the management system 410 further includes an over-discharge switch 419. The over-discharge switch 419 is configured to be connected to the energy storage component 418. The over-discharge switch 419 is connected in series with the over-charge protection switch 411. The control circuit 412 is configured to control the over-discharge protection switch 419 to be turned off in response to the energy storage component 418 reaching the over-discharge protection condition.

In an exemplary embodiment of the present disclosure, in response to the energy storage component 418 reaching the over-discharge protection condition (for example, the voltage of the energy storage component 418 is less than a determined threshold), the control circuit 412 is configured to control the over-discharge protection switch 419 to be turned off, which stops discharging the energy storage component 418, realizing over-discharge protection for the energy storage component 418.

In this way, the over-discharge protection switch 419 may protect the energy storage component 418, to prevent the energy storage component 418 from being over-discharged.

In some embodiments, the management system 410 further includes a first drive circuit 4142. The first drive circuit 4142 is configured to be connected to the control circuit 412 and the over-discharge protection switch 419. The control circuit 412 is configured to control the over-discharge protection switch 419 through the first drive circuit 4142.

In some embodiments, the management system 410 further includes a second drive circuit 4144. The second driving is configured to be connected to the control circuit 412 and the over-charge protection switch 411. When the control circuit 412 outputs the control signal, the second drive circuit 4144 drives the over-charge protection switch 411, to enable the charging current of the energy storage component 418 to decrease to the predetermined charging current. In response to the charging current of the energy storage component 418 decreasing to the predetermined charging current, the second drive circuit 4144 controls the over-charge protection switch 411 to be turned off.

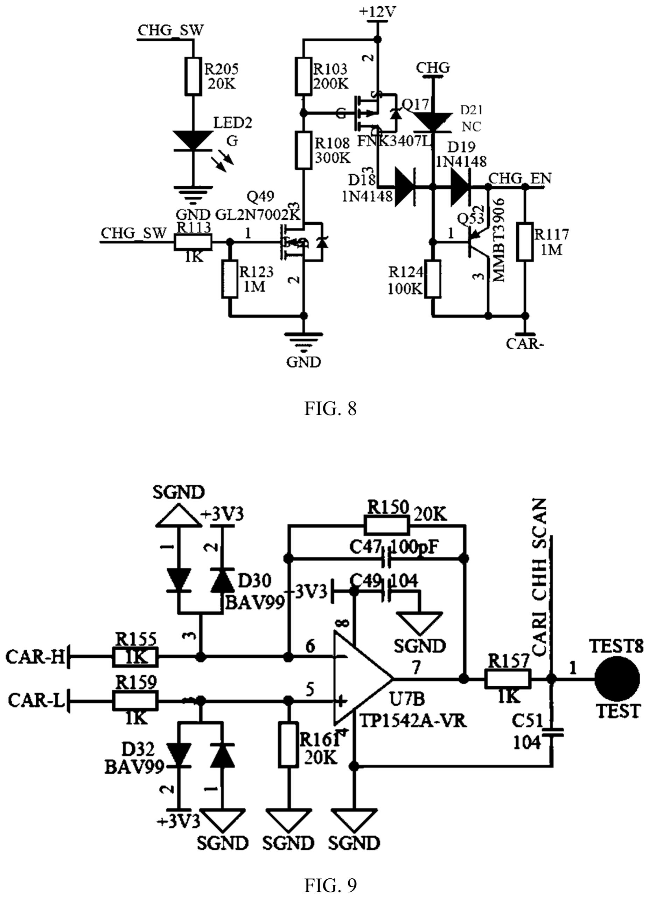

In an exemplary embodiment of the present disclosure, as illustrated in FIG. 8, the second drive circuit 4144 includes a first MOS transistor Q49 and a second MOS transistor Q17. The first MOS transistor Q49 has a terminal connected to the control circuit 412, and another terminal connected to the second MOS transistor Q17. Another terminal of the second MOS transistor Q17 is connected to the over-charge protection switch 411. The second drive circuit 4144 is configured to output a CHG_EN signal to control an on-off state of the over-charge protection switch 411. The CHG_EN signal includes a high level and a low level. The control signal may be the CHG_SW signal in the figures, and the control signal includes a high level, a low level, and the PWM signal. When the control signal input to the second drive circuit 4144 is at the high level, the first MOS transistor Q49 is turned on to turn on the second MOS transistor Q17, and the second drive circuit 4144 outputs the high level to drive the over-charge protection switch 411 to be turned on, in such a manner that the energy storage component 418 may be charged. When the control signal is at the low level, the first MOS transistor Q49 is turned off to turn off the second MOS transistor Q17, and the second drive circuit 4144 outputs the low level to control the over-charge protection switch 411 to be turned off, which stops charging the energy storage component 418.

In an embodiment, when the voltage of the energy storage component 418 is greater than the predetermined voltage, the control circuit 412 is configured to output the PWM signal, that is, the control signal switches between the high level and the low level at a certain frequency. In this way, the first MOS transistor Q49 in the second drive circuit 4144 switches the on-off state to enable the second MOS transistor Q17 to switch the on-off state, which controls the over-charge protection switch 411 to switch the on-off state. Thus, the charging current of the energy storage component 418 decreases. Until the charging current of the energy storage component 418 decreases to the predetermined charging current, the control circuit 412 is configured to output the low level, in such a manner that the first MOS transistor Q49 and the second MOS transistor Q17 of the second drive circuit 4144 are turned off, to control the over-charge protection switch 411 to be turned off, which stops charging the energy storage component 418, achieving the over-charge protection for the energy storage component 418 while avoiding the voltage spike.

In some embodiments, the control circuit 412 is further configured to control on/off of the over-charge protection switch 411 through a CHG signal, which is not specifically limited here.

In some embodiments, the management system 410 further includes a current detection circuit 415. The current detection circuit 415 is configured to detect a charging and discharging current of the energy storage component 418, and is connected to the control circuit 412.

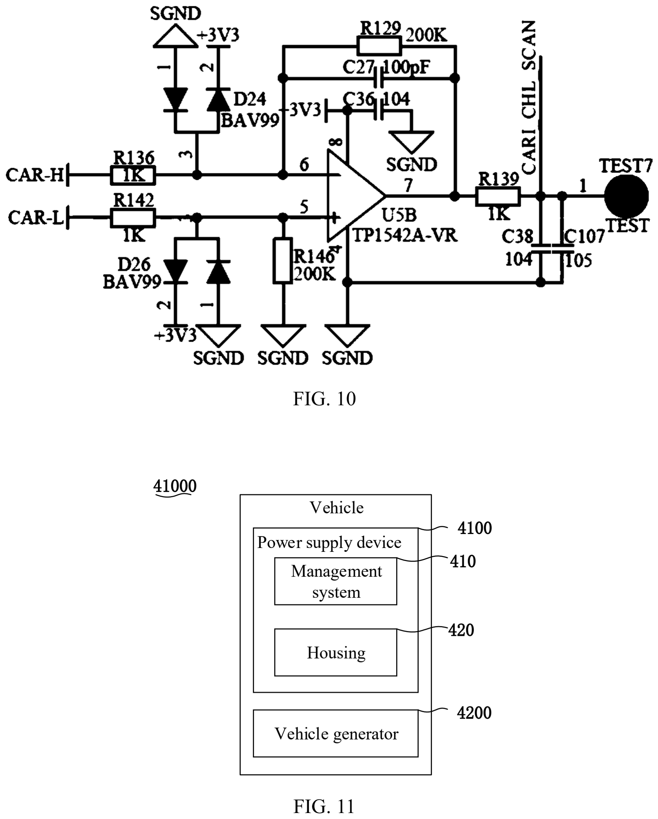

In an exemplary embodiment of the present disclosure, as illustrated in FIG. 9 and FIG. 10, the current detection circuit 415 includes a small-current detection circuit and a large-current detection circuit. FIG. 9 is a schematic diagram of the small-current detection circuit, and FIG. 10 is a schematic diagram of the large-current detection circuit. An operational amplifier of the large-current detection circuit has an amplification factor greater than an amplification factor of an operational amplifier of the small-current detection circuit. A current detection range of the large-current detection circuit may range from 50A to 500A, and a current detection range of the small-current detection circuit may range from 0A to 50A. The large-current detection circuit and the small-current detection circuit simultaneously detect the charging current of the energy storage component 418 and output a result. When the result output by the small-current detection circuit is within the current detection range of the small-current detection circuit, the control circuit 412 is configured to output the control signal based on the detection result of the small-current detection circuit. When the result output by the small-current detection circuit exceeds the current detection range of the small -current detection circuit, the control circuit 412 is configured to perform control based on the detection result of the large-current detection circuit.

In an embodiment, the predetermined charging current is 3A. When the voltage of the energy storage component 418 is greater than the predetermined voltage, the current detection circuit 415 is configured to detect the charging current of the energy storage component 418. When the charging current of the energy storage component 418 is greater than 3A, the control circuit 412 is configured to output the PWM control signal to control the switching frequency and the duty cycle of the MOS transistor. Thus, the MOS transistor switches the on-off state at a certain frequency, to enable the charging current of the energy storage component 418 to decrease. When the current detection circuit 415 detects that the charging current of the energy storage component 418 is less than 3A, the control circuit 412 is configured to control the MOS transistor to be turned off, which stops charging the energy storage component 418, protecting the energy storage component 418, and preventing the charging device from generating the voltage spike and triggering the high-voltage protection.

In this way, the charging current of the energy storage component 418 may be detected by the current detection circuit 415, and a detection result is provided by the current detection circuit 415 to the control circuit 412, in such a manner that the control circuit 412 may perform control based on a detected charging current of the energy storage component 418.

In some embodiments, the management system 410 further includes a heating control circuit 416. The heating control circuit 416 is configured to heat the energy storage component 418. The control circuit 412 is connected to the heating control circuit 416, and is configured to control the heating control circuit 416 to heat the energy storage component 418 when a temperature of the energy storage component 418 is lower than a predetermined temperature.

In an exemplary embodiment of the present disclosure, the heating control circuit 416 includes a heating film. When the temperature of the energy storage component 418 is lower than the predetermined temperature, the control circuit 412 may control the heating film to heat the energy storage component 418 itself, enabling the energy storage component 418 to operate normally even at a low temperature.

In this way, under a low temperature condition, the energy storage component 418 may be heated by controlling the heating control circuit 416, to enable the energy storage component 418 to obtain a good charging or discharging operating temperature range.

In some embodiments, the management system 410 further includes a temperature detection circuit 417. The temperature detection circuit 417 is connected to the energy storage component 418 and the control circuit 412, and is configured to detect the temperature of the energy storage component 418.

In an exemplary embodiment of the present disclosure, the temperature detection circuit 417 may transmit detected temperature information of the energy storage component 418 to the control circuit 412, in such a manner that the control circuit 412 may realize corresponding control, for example, controlling the heating control circuit 416 to heat the energy storage component 418, based on the temperature of the energy storage component 418. In an embodiment, when the temperature of the energy storage component 418 is lower than the predetermined temperature, the temperature detection circuit 417 is configured to transmit the temperature information to the control circuit 412. The control circuit 412 is configured to control the heating film to heat the energy storage component 418 itself. In this way, the energy storage component 418 may reach a good charging or discharging operating temperature range under the low temperature condition.

Thus, the temperature of the energy storage component 418 may be detected by the temperature detection circuit 417, and the detected temperature information may be transmitted by the temperature detection circuit 417 to the control circuit 412, in such a manner that the control circuit 412 may perform the corresponding control, to enable the management system 410 to be more intelligent and safer.

As illustrated in FIG. 11, a power supply device 4100 provided in an embodiment of the present disclosure includes the management system 410 according to any one of the above-described embodiments and a housing 420. The management system 410 is disposed in the housing 420.

In an exemplary embodiment of the present disclosure, the housing may 420 may be made of materials such as plastic and metal. The housing 420 is capable of providing protection for the power supply device 4100, to reduce or prevent the power supply device 4100 from being affected by external dust, water vapor, etc.

In some embodiments, the power supply device 4100 includes a starting power supply or a vehicle battery.

In some embodiments, the power supply device 4100 includes a 24V starting power supply or a 24V vehicle battery.

In some embodiments, the power supply device 4100 further includes a battery clamp.

In this way, the power supply device 4100 is connected to a vehicle generator 4200 through the battery clamp. The vehicle generator 4200 is configured to charge the energy storage component 418 through the battery clamp.

As illustrated in FIG. 11, a vehicle 41000 provided in an embodiment of the present disclosure includes the power supply device 4100 according to any one of the above-described embodiments and the vehicle generator 4200. The vehicle generator 4200 is capable of charging the energy storage component 418.

In this way, the vehicle generator 4200 of the vehicle 41000 is capable of charging the energy storage component 418. Through the power supply device 4100 according to any one of the above-described embodiments, the over-charge protection switch 411 may be controlled through the control signal, to enable the charging current of the energy storage component 418 to decrease to the predetermined charging current and the over-charge protection switch 411 is subsequently turned off. Thus, the charging device has sufficient time to adjust the output, avoiding the delayed response of the charging device resulting from directly turning off the over-charge protection switch 411, and avoiding the voltage spike generated by the charging device.

An over-charge protection method provide in an embodiment of the present disclosure includes: 01: outputting the control signal in response to the energy storage component 418 reaching the over-charge protection condition, the control signal being configured to control the over-charge protection switch 411, to enable the charging current of the energy storage component 418 to decrease to the predetermined charging current; and 02: turning off the over-charge protection switch 411 subsequent to the charging current of the energy storage component 418 decreasing to the predetermined charging current.

The over-charge protection method of this embodiment may be implemented by the management system 410 of the above-described embodiments. Operation 01 and Operation 02 may be implemented by the control circuit 412.

The explanation of the management system 410 in the above-described embodiments is applicable to the over-charge protection method of this embodiment, and will not be repeated here.

In this way, with the over-charge protection method provide in an embodiment of the present disclosure, the over-charge protection switch 411 is controlled through the control signal, to enable the charging current of the energy storage component 418 to decrease to the predetermined charging current. The over-charge protection switch 411 is subsequently turned off. Thus, the charging device has sufficient time to adjust the output, avoiding the delayed response of the charging device resulting from directly turning off the over-charge protection switch 411, and avoiding the voltage spike generated by the charging device.

The appearances of the above-described phrases throughout this specification are not necessarily referring to the same embodiment or example of the present disclosure. In addition, different embodiments or examples and features of different embodiments or examples described in the specification may be combined by those skilled in the art without mutual contradiction.

In addition, the term "connect" should be understood in a broad sense. For example, it may be a fixed connection or a detachable connection or connection as one piece; direct connection or indirect connection through an intermediate or internal communication of two components. For those of ordinary skill in the art, the specific meaning of the above-described terms in the present disclosure may be understood according to specific circumstances.

In addition, terms such as "first" and "second" are used herein for purposes of description and should not be construed as indicating or implying relative importance, nor as implicitly specifying the quantity of the technical features referenced. Thus, the feature defined with "first" and "second" may explicitly or implicitly comprise one or more this feature. In the description of the present disclosure, "a plurality of" means at least two, for example, two or three, unless specified otherwise.

Any process or method described in a flow chart or described herein in other ways may be understood to include one or more modules, segments or portions of codes of executable instructions for achieving specific logical functions or steps in the process, and the scope of a preferred embodiment of the present disclosure includes other implementations, where the functions may be performed not necessarily in the order shown or discussed, but in a substantially simultaneous manner or in reverse order, depending on the functions involved, which should be understood by those skilled in the art of the embodiments of the disclosure.

Although embodiments of the present disclosure have been shown and described above, it should be understood that above embodiments are merely exemplary, and cannot be construed to limit on the present disclosure. For those skilled in the art, various changes, modifications, replacements, and variations can be made to the embodiments without departing from the scope of the present disclosure.

## Claims

1. A management system for a vehicle battery, wherein the management system comprises:
a first energy storage component;
a battery interface, wherein the first energy storage component is capable of supplying power to an electrical device of a vehicle through the battery interface;
a load interface, wherein the first energy storage component is capable of supplying power to a load through the load interface; and
an energy storage component management circuit configured to: disconnect the first energy storage component from the load interface when an electric charge of the first energy storage component is less than a first predetermined electric charge, and disconnect the first energy storage component from the battery interface when the electric charge of the first energy storage component is less than a second predetermined electric charge, the first predetermined electric charge being greater than the second predetermined electric charge.

2. The management system according to claim 1, further comprising:
an over-discharge protection switch circuit connected to the first energy storage component and the battery interface, wherein the energy storage component management circuit is configured to disconnect the over-discharge protection switch circuit when the electric charge of the first energy storage component is less than the second predetermined electric charge, to disconnect the first energy storage component from the battery interface.

3. The management system according to claim 1, further comprising:
a load discharge switch circuit connected to the first energy storage component and the load interface, wherein the energy storage component management circuit is configured to disconnect the load discharge switch circuit when the electric charge of the first energy storage component is less than the first predetermined electric charge, to disconnect the first energy storage component from the load interface.

4. The management system according to claim 1, further comprising:
a key circuit configured to input a key signal; and
a control circuit configured to generate a control signal for controlling the energy storage component management circuit based on the key signal;
wherein the energy storage component management circuit is configured to: when the control signal is received and the electric charge of the first energy storage component is greater than a third predetermined electric charge, connect the first energy storage component and the battery interface; and when the control signal is received and the electric charge of the first energy storage component is less than the third predetermined electric charge, disconnect the first energy storage component from the battery interface, the second predetermined electric charge being greater than the third predetermined electric charge.

5. The management system according to claim 1, further comprising:
a communication module configured to communicate with a predetermined terminal; and
a control circuit configured to generate a control signal for controlling the energy storage component management circuit based on a target communication signal of the predetermined terminal;
wherein the energy storage component management circuit is configured to: when the control signal is received and the electric charge of the first energy storage component is greater than a third predetermined electric charge, connect the first energy storage component and the battery interface; and when the control signal is received and the electric charge of the first energy storage component is less than the third predetermined electric charge, disconnect the first energy storage component from the battery interface, the second predetermined electric charge being greater than the third predetermined electric charge.

6. The management system according to claim 1, further comprising:
a heating control circuit configured to heat the first energy storage component; and
a control circuit configured to control the heating control circuit to heat the first energy storage component when a temperature of the first energy storage component is lower than a predetermined temperature.

7. The management system according to claim 6, further comprising:
a temperature detection circuit configured to detect the temperature of the first energy storage component.

8. The management system according to claim 1, wherein:
the electrical device comprises a starter, a vehicle computer, vehicle lights, or an audio system; and
the load comprises a parking air conditioner or a direct current household appliance.

9. The management system according to claim 1, further comprising:
a first current detection circuit configured to detect a current output by the first energy storage component to the battery interface, and
a second current detection circuit configured to detect a current output by the first energy storage component to the load interface.

10. The management system according to claim 1, wherein:
the electrical device comprises a starter; and
the management system further comprises a second energy storage component configured to be connected in parallel with the first energy storage component, to supply power to the starter in response to the vehicle being started.

11. A management system for a vehicle battery, wherein the management system comprises:
a first energy storage component;
a battery interface, wherein the first energy storage component is capable of supplying power to an electrical device of a vehicle through the battery interface;
a load interface, wherein the first energy storage component is capable of supplying power to a load through the load interface;
an over-discharge protection switch circuit connected to the first energy storage component and the battery interface;
a load discharge switch circuit connected to the first energy storage component and the load interface; and
an energy storage component management circuit connected to the over-discharge protection switch circuit and the load discharge switch circuit, wherein the energy storage component management circuit is configured to control the over-discharge protection switch circuit and the load discharge switch circuit respectively based on an electric charge of the first energy storage component.

12. The management system according to claim 11, wherein the energy storage component management circuit comprises:
a first control terminal connected to the over-discharge protection switch circuit; and
a second control terminal connected to the load discharge switch circuit.

13. The management system according to claim 11, wherein the energy storage component management circuit is configured to disconnect the load discharge switch circuit when the electric charge of the first energy storage component is less than a first predetermined electric charge, to disconnect the first energy storage component from the load interface.

14. The management system according to claim 13, wherein the over-discharge protection switch circuit is connected to the first energy storage component and the battery interface, and wherein the energy storage component management circuit is configured to disconnect the over-discharge protection switch circuit when the electric charge of the first energy storage component is less than a second predetermined electric charge, to disconnect the first energy storage component from the battery interface, the first predetermined electric charge being greater than the second predetermined electric charge.

15. The management system according to claim 14, further comprising:
a key circuit configured to input a key signal; and
a control circuit connected to the key circuit and the energy storage component management circuit, and configured to generate a control signal for controlling the energy storage component management circuit based on the key signal;
wherein the energy storage component management circuit is configured to: when the control signal is received and the electric charge of the first energy storage component is greater than a third predetermined electric charge, connect the first energy storage component and the battery interface; and when the control signal is received and the electric charge of the first energy storage component is less than the third predetermined electric charge, disconnect the first energy storage component from the battery interface, the second predetermined electric charge being greater than the third predetermined electric charge.

16. The management system according to claim 14, further comprising:
a communication module configured to communicate with a predetermined terminal; and
a control circuit connected to the communication module and the energy storage component management circuit, and configured to generate a control signal for controlling the energy storage component management circuit based on a target communication signal of the predetermined terminal;
wherein the energy storage component management circuit is configured to: when the control signal is received and the electric charge of the first energy storage component is greater than a third predetermined electric charge, connect the first energy storage component and the battery interface; and when the control signal is received and the electric charge of the first energy storage component is less than the third predetermined electric charge, disconnect the first energy storage component from the battery interface, the second predetermined electric charge being greater than the third predetermined electric charge.

17. The management system according to claim 11, further comprising:
a heating control circuit configured to heat the first energy storage component; and
a control circuit connected to the heating control circuit, and configured to control the heating control circuit to heat the first energy storage component when a temperature of the first energy storage component is lower than a predetermined temperature.

18. The management system according to claim 17, further comprising:
a temperature detection circuit connected to the first energy storage component and the control circuit, and configured to detect the temperature of the first energy storage component.

19. The management system according to claim 11, wherein:
the electrical device comprises a starter, a vehicle computer, vehicle lights, or an audio system; and
the load comprises a parking air conditioner or a direct current household appliance.

20. The management system according to claim 11, further comprising:
a first current detection circuit configured to detect a current output by the first energy storage component to the battery interface, and
a second current detection circuit configured to detect a current output by the first energy storage component to the load interface.

21. The management system according to claim 11, wherein:
the electrical device comprises a starter; and
the management system further comprises a second energy storage component configured to be connected in parallel with the first energy storage component, to supply power to the starter in response to the vehicle being started.

22. A vehicle battery, comprising:
the management system according to any one of claims 1 to 21; and
a housing, wherein the management system is disposed in the housing.

23. The vehicle battery according to claim 22, wherein the first energy storage component comprises at least one of a battery cell or a capacitor.

24. A vehicle, comprising:
the vehicle battery according to claim 22 or 23;
an electrical device, wherein the vehicle battery is capable of supplying power to the electrical device.

25. A management system for a power supply device, wherein the management system comprises:
an energy storage component;
a battery interface, wherein the energy storage component is configured to supply power to an electrical device of a vehicle through the battery interface;
a MOS transistor connected to the energy storage component and the battery interface;
a relay connected in parallel with the MOS transistor; and
a control circuit configured to turn on the relay and the MOS transistor, to enable the energy storage component to supply power to the electrical device through the battery interface.

26. The management system according to claim 25, wherein the control circuit is configured to turn on the relay when an output current of the energy storage component through the MOS transistor is within a first predetermined output current range.

27. The management system according to claim 26, wherein:
the control circuit is configured to turn on the MOS transistor and turn off the relay when the output current of the energy storage component through the MOS transistor is within a second predetermined output current range;
the first predetermined output current range is greater than the second predetermined output current range;
the first predetermined output current range is a current range for vehicle ignition; and
the second predetermined output current range is a current range for normal operation of the vehicle.

28. The management system according to claim 26, wherein:
the control circuit is configured to turn off the MOS transistor and the relay when the output current of the energy storage component through the MOS transistor is within a third predetermined output current range; and
the third predetermined output current range is greater than the first predetermined output current range.

29. The management system according to claim 26, further comprising:
a current detection circuit connected to the control circuit, and configured to detect a current output by the energy storage component to the battery interface.

30. The management system according to claim 25, wherein the control circuit is further configured to turn on the relay and turn off the MOS transistor.

31. The management system according to claim 25, wherein the MOS transistor comprises an over-discharge protection MOS transistor and an over-charge protection MOS transistor that are connected in series, the over-discharge protection MOS transistor and the over-charge protection MOS transistor being connected to the energy storage component and the battery interface.

32. The management system according to claim 25, further comprising:
a heating control circuit configured to heat the energy storage component; and
the control circuit connected to the heating control circuit, and configured to control the heating control circuit to heat the energy storage component when a temperature of the energy storage component is lower than a predetermined temperature.

33. The management system according to claim 32, further comprising:
a temperature detection circuit connected to the energy storage component and the control circuit, and configured to detect the temperature of the energy storage component.

34. The management system according to claim 25, further comprising at least one of:
a temperature detection circuit connected to the control circuit, and configured to detect a temperature of at least one of the energy storage component, the relay, or the MOS transistor;
a reverse detection circuit connected to the control circuit and the battery interface, and configured to detect whether the battery interface is reversely connected to the electrical device;
a correctness detection circuit connected to the control circuit and the battery interface, and configured to detect whether the battery interface is correctly connected to the electrical device;
a short circuit detection circuit connected to the control circuit and the battery interface, and configured to detect whether the battery interface is short-circuited; or
an external load status detection circuit connected to the control circuit and the battery interface, and configured to detect whether the battery interface is connected to the vehicle.

35. The management system according to claim 25, wherein the power supply device comprises a starting power supply or a vehicle battery.

36. The management system according to claim 25, wherein the power supply device comprises a 24V starting power supply or a vehicle battery.

37. The management system according to claim 25, wherein the energy storage component comprises at least one of a battery cell or a capacitor.

38. A power supply device, comprising:
the management system according to any one of claims 25 to 37; and
a housing, wherein the management system is disposed in the housing.

39. The power supply device according to claim 38, further comprising a battery clamp.

40. A vehicle, comprising:
the power supply device according to claim 38 or 39; and
an electrical device, wherein the power supply device is capable of supplying power to the electrical device.

41. A power supply device, comprising:
a battery interface configured to be connected to an energy storage component, wherein the energy storage component is configured to supply power to an electrical device of a vehicle through the battery interface;
a MOS transistor configured to be connected to the energy storage component and the battery interface; and
a high-power absorption device connected in parallel with the MOS transistor, and configured to enable a voltage of the MOS transistor to be less than a predetermined voltage.

42. The power supply device according to claim 41, further comprising the energy storage component.

43. The power supply device according to claim 41, wherein the MOS transistor comprises a discharge MOS transistor, wherein:
the discharge MOS transistor comprises a source and a drain that are connected to the high-power absorption device; and
the high-power absorption device is configured to operate when a voltage between the source and the drain of the MOS transistor is greater than the predetermined voltage, to enable the voltage between the source and the drain of the MOS transistor to be less than the predetermined voltage.

44. The power supply device according to claim 41 or 43, wherein the high-power absorption device comprises a transient voltage suppressor configured to clamp the voltage of the MOS transistor when the voltage of the MOS transistor is greater than the predetermined voltage.

45. The power supply device according to claim 41, further comprising:
a relay connected in parallel with the MOS transistor; and
a control circuit configured to turn on the relay and the MOS transistor, to enable the energy storage component to supply power to the electrical device through the battery interface.

46. The power supply device according to claim 45, wherein the control circuit is configured to turn on the relay when an output current of the energy storage component through the MOS transistor is within a first predetermined output current range.

47. The power supply device according to claim 46, wherein:
the control circuit is configured to turn on the MOS transistor and turn off the relay when the output current of the energy storage component through the MOS transistor is within a second predetermined output current range;
the first predetermined output current range is greater than the second predetermined output current range;
the first predetermined output current range is a current range for vehicle ignition; and
the second predetermined output current range is a current range for normal operation of the vehicle.

48. The power supply device according to claim 46, wherein:
the control circuit is configured to turn off the MOS transistor and the relay when the output current of the energy storage component through the MOS transistor is within a third predetermined output current range; and
the third predetermined output current range is greater than the first predetermined output current range.

49. The power supply device according to claim 46, further comprising:
a current detection circuit connected to the control circuit, and configured to detect a current output by the energy storage component to the battery interface.

50. The power supply device according to claim 45, wherein the control circuit is further configured to turn on the relay and turn off the MOS transistor.

51. The power supply device according to claim 45, wherein the MOS transistor comprises an over-discharge protection MOS transistor and an over-charge protection MOS transistor that are connected in series, the over-discharge protection MOS transistor and the over-charge protection MOS transistor being connected to the energy storage component and the battery interface.

52. The power supply device according to claim 41, comprising a starting power supply or a vehicle battery.

53. The power supply device according to claim 41, comprising a 24V starting power supply or a vehicle battery.

54. The power supply device according to claim 41, wherein the energy storage component comprises at least one of a battery cell or a capacitor.

55. The power supply device according to claim 41, further comprising a battery clamp.

56. A management system, comprising:
an over-charge protection switch configured to be connected to an energy storage component; and
a control circuit configured to output a control signal in response to the energy storage component reaching an over-charge protection condition, wherein the control signal is configured to control the over-charge protection switch, to enable a charging current of the energy storage component to decrease to a predetermined charging current, and wherein the control circuit is further configured to turn off the over-charge protection switch subsequent to the charging current of the energy storage component decreasing to the predetermined charging current.

57. The management system according to claim 56, wherein the control signal comprises a PWM control signal configured to control a switching frequency and a duty cycle of the over-charge protection switch, to enable the charging current of the energy storage component to decrease to the predetermined charging current.

58. The management system according to claim 56, wherein the predetermined charging current ranges from 0.5A to 10A.

59. The management system according to claim 56, further comprising a battery interface, wherein:
the energy storage component is charged through the battery interface; and
the over-charge protection switch is connected to the energy storage component and the battery interface.

60. The management system according to claim 59, wherein the battery interface is configured to be connected to a vehicle generator.

61. The management system according to claim 56, wherein the over-charge protection switch comprises a MOS transistor.

62. The management system according to claim 56, wherein the over-charge protection condition comprises:
a voltage of the energy storage component being greater than a predetermined voltage.

63. The management system according to claim 56, wherein the control circuit is configured to determine the control signal based on the charging current of the energy storage component, and the control signal is configured to control the over-charge protection switch, to enable the charging current of the energy storage component to decrease to the predetermined charging current within a predetermined time.

64. The management system according to claim 56, further comprising:
the energy storage component;
wherein the energy storage component comprises a battery and/or a super capacitor, the battery comprising a lead-acid battery and a lithium battery.

65. The management system according to claim 56, further comprising:
an over-discharge protection switch configured to be connected to the energy storage component, and connected in series with the over-charge protection switch;
wherein the control circuit is configured to control the over-discharge protection switch to be turned off in response to the energy storage component reaching an over-discharge protection condition.

66. The management system according to claim 56, further comprising:
a current detection circuit connected to the control circuit, and configured to detect a charging and discharging current of the energy storage component.

67. The management system according to claim 56, further comprising:
a heating control circuit configured to heat the energy storage component; and
the control circuit connected to the heating control circuit, and configured to control the heating control circuit to heat the energy storage component when a temperature of the energy storage component is lower than a predetermined temperature.

68. The management system according to claim 67, further comprising:
a temperature detection circuit connected to the energy storage component and the control circuit, and configured to detect the temperature of the energy storage component.

69. A power supply device, comprising:
the management system according to any one of claims 56 to 68; and
a housing, wherein the management system is disposed in the housing.

70. The power supply device according to claim 69, comprising a starting power supply or a vehicle battery.

71. The power supply device according to claim 69, comprising a 24V starting power supply or a vehicle battery.

72. The power supply device according to claim 69, further comprising a battery clamp.

73. A vehicle, comprising:
the power supply device according to any one of claims 69 to 72; and
a vehicle generator, wherein the vehicle generator is capable of charging the energy storage component.

74. An over-charge protection method, comprising:
outputting a control signal in response to an energy storage component reaching an over-charge protection condition, wherein the control signal is configured to control an over-charge protection switch, to enable a charging current of the energy storage component to decrease to a predetermined charging current; and
turning off the over-charge protection switch subsequent to the charging current of the energy storage component decreasing to the predetermined charging current.
